# EUROPÄISCHE PATENTANMELDUNG

(11) **EP 4 800 634 A1**
(43) Veröffentlichungstag der Anmeldung: **02.09.2026**
(21) Anmeldenummer: 26157579.9
(22) Anmeldetag: 10.02.2026
(51) Int. Cl.: G06Q 50/20, G09B 5/06, G09B 7/00, G09B 7/02, G06Q 10/101, G06Q 10/10, G09B 7/04

(54) **KOMMUNIKATIONSSYSTEM ZUR ERZEUGUNG VON UNTERRICHTSINHALTEN**

(30) Priorität: 26.02.2025 DE 102025107355
(71) Anmelder: Stiftung Sternenstaub, 80331 München Bayern (DE)
(72) Erfinder: Todenhöfer, Valérie, 80331 Müchen (DE); Schmidt, Florian, 80331 München (DE); Schmidt, Miriam, 80331 München (DE)
(74) Vertreter: Hafner & Kohl PartmbB

(57) **Zusammenfassung**

Kommunikationssystem zur wenigstens teilautomatisierten Erzeugung von Unterrichtsinhalten.

## Beschreibung

Die Erfindung betrifft ein Kommunikationssystem zur wenigstens teilautomatisierten Erzeugung von Unterrichtsinhalten, insbesondere für Schüler.

Aus dem Stand der Technik sind diverse Kommunikationssysteme bekannt, welche zu verschiedenen Zwecken eingerichtet sind.

Beispielhaft wird in diesem Zusammenhang auf das Dokument WO 2023/049 944 A2 verwiesen, welches ein als Kommunikationssystem implementierbares Computerprogramm offenbart, das zur Erzeugung eines virtuellen Objekts in einer Video-Aufnahme durch einen Diensterbringer, der einem diensterbringenden Benutzer mit seinem Endgerät und/oder zumindest einer Künstlichen -Intelligenz-Funktion in einem Computer-Server-System entspricht, eingerichtet ist.

Weiterhin sind Kommunikationssysteme bekannt, welche Schüler bzw. Schülerinnen computertechnisch implementiert bei der Ausführung, Planung, Überwachung von Lerneinheiten unterstützen.

Ein Beispiel eines solchen Kommunikationssystems ist in dem Dokument DE 10 2021 109 615 A1 beschrieben und umfasst im Allgemeinen wenigstens einen Datenspeicher, in welchem von einem unter wenigstens einem Qualifizierungskriterium qualifizierter Bereitsteller ausgewählte qualifizierte Informationen abrufbar hinterlegt sind, wobei die in den qualifizierten Informationen beschriebenen Inhalte in dem Datenspeicher in einer von dem qualifizierten Bereitsteller erstellten, inhaltlich nach wenigstens einem Ordnungskriterium geordneten Ordnungsstruktur hinterlegt sind, und wenigstens ein nutzerseitiges Endgerät, welches eingerichtet ist, über eine Datenverbindung mit dem wenigstens einen Datenspeicher zu kommunizieren, um über eine dem wenigstens einen Datenspeicher zugeordnete Kommunikationsschnittstelle auf die in dem wenigstens einen Datenspeicher hinterlegten qualifizierten Informationen zugreifen zu können.

Dieses bekannte Kommunikationssystem ist sonach mit dem Fokus darauf konfiguriert, Schüler bzw. Schülerinnen bei der Ausführung, Planung, Überwachung von deren Lerneinheiten zu unterstützen.

Es besteht jedoch auch ein Bedarf nach Kommunikationssystemen, welche eingerichtet sind, Lehrkräfte bei der Erzeugung, Planung und/oder Durchführung von Unterrichtsinhalten computertechnisch implementiert zu unterstützen; dies nicht nur, um die Erzeugung, Planung und/oder Durchführung von Unterrichtsinhalten grundsätzlich einfacher und/oder individueller zu gestalten, sondern auch, um technische Mittel, wie z. B. Prinzipien der künstlichen Intelligenz, Sprachmodelle (Large Language Model, kurz LLM), etc. in die Erzeugung, Planung und/oder Durchführung von Unterrichtsinhalten einzubinden, um - im Vergleich zu einer konventionellen Erzeugung, Planung und/oder Durchführung von Unterrichtsinhalten - die gegebenen computertechnischen Ressourcen effizient bzw. optimal zu nutzen.

Der Erfindung liegt damit die Aufgabe zugrunde, ein verbessertes Kommunikationssystem zur wenigstens teilautomatisierten Erzeugung von Unterrichtsinhalten sowie gegebenenfalls auch zur wenigstens teilautomatisierten Planung und/oder Durchführung von Unterrichtsinhalten anzugeben.

Die Aufgabe wird durch ein Kommunikationssystem zur wenigstens teilautomatisierten Erzeugung von Unterrichtsinhalten sowie gegebenenfalls auch zur wenigstens teilautomatisierten Planung und/oder Durchführung von Unterrichtsinhalten gemäß Anspruch 1 gelöst. Die hierzu abhängigen Ansprüche betreffen mögliche Ausführungsformen des Kommunikationssystems.

Ein erster Aspekt der Erfindung betrifft ein Kommunikationssystem, welches zur wenigstens teilautomatisierten, gegebenenfalls vollautomatisierten, Erzeugung von Unterrichtsinhalten bzw. Unterrichtsinhaltsinformationen sowie gegebenenfalls auch zur wenigstens teilautomatisierten, gegebenenfalls vollautomatisierten, Planung und/oder Durchführung von Unterrichtsinhalten für Schüler bzw. Schülerinnen (nachfolgend wird allein der Begriff "Schüler" verwendet) eingerichtet ist. Bei dem Kommunikationssystem handelt es sich sonach im Allgemeinen um ein computertechnisch implementiertes System, welches eingerichtet ist, eine Lehrkraft bei der wenigstens teilautomatisierten, gegebenenfalls vollautomatisierten, Erzeugung von Unterrichtsinhalten sowie gegebenenfalls auch bei der wenigstens teilautomatisierten, gegebenenfalls vollautomatisierten, Planung und/oder Durchführung von Unterrichtsinhalten für Schüler zu unterstützen. Das im Weiteren kurz auch als "System" bezeichnete Kommunikationssystem ist sonach im Allgemeinen computertechnisch eingerichtet, computertechnisch implementiert unterstützende Dienstleistungen für eine oder mehrere Lehrkräfte bei der Erzeugung von Unterrichtsinhalten sowie gegebenenfalls auch bei der Planung und/oder Durchführung von Unterrichtsinhalten für Schüler bereitzustellen.

Das System umfasst zumindest die folgenden, insbesondere computertechnisch implementierten, Bestandteile, welche eingerichtet sind, miteinander computertechnisch zusammenzuwirken: wenigstens eine hardware- und/oder softwaremäßig implementierte Datenspeichereinrichtung, wenigstens ein hardware- und/oder softwaremäßig implementiertes Endgerät und wenigstens eine hardware- und/oder softwaremäßig implementierte Steuereinrichtung. Die vorgenannten Bestandteile des Systems können eingerichtet sein, über wenigstens eine, z. B. drahtgebundene oder drahtlose, Daten- bzw. Kommunikationsverbindung bzw. über wenigstens ein, z. B. drahtgebundenes oder drahtloses, Kommunikationsnetzwerk direkt oder indirekt, d. h. unter Zwischenschaltung wenigstens einer Kommunikationsschnittstelle, wie z. B. einer Programm- bzw. Softwareanwendung (App), Webseite, Web-Portal, etc., und/oder unter Zwischenschaltung wenigstens einer Programmierschnittstelle, wie z. B. einer API, etc., miteinander zu kommunizieren, wobei ein oder mehrere Kommunikationsprotokolle bzw. - standards, insbesondere Internetprotokolle bzw. -standards, wie z. B. TCP/IP-Protokolle bzw. -standards, verwendet werden können.

Die wenigstens eine Datenspeichereinrichtung des Systems kann als Server, insbesondere als ein Cloud-Server, einer Client-Server-Struktur erachtet werden. Das wenigstens eine Endgerät des Systems kann als Client einer entsprechenden Client-Server-Struktur erachtet werden. Das System kann sonach insgesamt als Client-Server-Struktur ausgeführt bzw. implementiert sein.

Die wenigstens eine Datenspeichereinrichtung kann z. B. durch einen hardware- und/oder softwaremäßig implementierten Server gebildet sein, einen Bestandteil eines solchen Servers bilden oder einen solchen Server umfassen. Angesprochen sind insbesondere Cloud- bzw. Netzwerk-Server mit einer geeigneten Kommunikationsstruktur zur Integration des Servers in ein Daten- bzw. Kommunikationsnetzwerk, wie z. B. das Internet, über welche sich eine Daten- bzw. Kommunikationsverbindung mit wenigstens einem nutzerseitigen Endgerät ausbilden bzw. aufrechterhalten lässt. Die wenigstens eine Datenspeichereinrichtung umfasst alle zu ihrem Betrieb notwendigen hardware- und/oder softwaremäßig implementierten Bestandteile; hierzu können je nach konkreter Konfiguration z. B. eine computertechnisch implementierte Prozessoreinheit und/oder eine computertechnisch implementierte Datenspeichereinheit zählen.

Um computertechnisch mit den anderen Bestandteilen des Systems kommunizieren bzw. mit diesen verbunden werden zu können, weist die wenigstens eine Datenspeichereinrichtung wenigstens eine, z. B. in Form eines Gateways ausgebildete oder ein solches umfassende, Kommunikationseinheit oder - schnittstelle auf. Die wenigstens eine Kommunikationseinheit oder -schnittstelle kann insbesondere eingerichtet sein, über wenigstens eine Daten- bzw. Kommunikationsverbindung bzw. wenigstens ein Kommunikationsnetzwerk, wie z. B. ein Telekommunikationsnetzwerk oder ein Datennetzwerk, wie z. B. das Internet, mit dem wenigstens einen Endgerät eines Nutzers und/oder der wenigstens einen Steuereinrichtung zu kommunizieren.

In der wenigstens einen Datenspeichereinrichtung sind ein oder mehrere Unterrichtsinhaltinformationen zu wenigstens einer Unterrichtseinheit abrufbar gespeichert. Bei entsprechenden Unterrichtsinhaltinformationen kann es sich z. B. um in einer Unterrichtseinheit verwendbare elektronische bzw. computertechnisch verarbeitbare Inhalte, insbesondere Dokumente, wie z. B. Arbeitsdokumente-Arbeitsblätter, Aufgaben- und Testdokumente, Kontrolldokumente, Präsentationen, interaktive Inhalte, Quiz, Rätsel, lernfördernde Spiele, etc., handeln. Entsprechende Unterrichtsinhaltinformationen können beispielsweise und damit nicht abschließend in wenigstens einem der folgenden Formate, hierbei kann es sich insbesondere um entsprechende Datei- bzw. Datenformate handeln, vorliegen: einem Textformat, einem Bildformat, einem Graphikformat, einem Tabellenformat, einem Formelformat, einem Präsentationsformat, einem Vektorformat, einem Webseitenformat, einem Audioformat, einem Videoformat, einem Weblinkformat, etc.

Entsprechende Unterrichtsinhaltinformationen können nach bestimmten Kategorien kategorisiert in der wenigstens einen Datenspeichereinrichtung gespeichert sein. Entsprechende Kategorien können beispielsweise und damit nicht abschließend sein: Inhaltskategorien, welche die Unterrichtsinhaltinformationen nach ihren Inhalten kategorisieren, Alterskategorien, welche die Unterrichtsinhaltinformationen nach ihrem Alter kategorisieren, Zielgruppenkategorien, welche die Unterrichtsinhaltinformationen nach ihrer Zielgruppe kategorisieren, Sprachkategorien, welche die Unterrichtsinhaltinformationen nach ihrer Sprache kategorisieren, Formatkategorien, welche die Unterrichtsinhaltinformationen nach ihrem Format, z. B. Text, Bild, Graphik, Tabelle, Formel, Präsentation, Vektor, Webseite, Audio, Video, Weblink, Multimedia, etc. kategorisieren, Schwierigkeitskategorien, welche die Unterrichtsinhaltinformationen nach ihrem Schwierigkeitsgrad kategorisieren, etc.

Das wenigstens eine Endgerät kann grundsätzlich jedwedes computertechnisch implementierte Endgerät sein. Das wenigstens eine Endgerät kann daher je nach konkreter Konfiguration z. B. eine computertechnisch implementierte Prozessoreinheit und/oder eine computertechnisch implementierte Datenspeichereinheit und/oder eine computertechnisch implementierte Kommunikationsschnittstelle, insbesondere eine Kommunikationsschnittstelle für eine Drahtlos- bzw. Funkkommunikation über einen Drahtlos- bzw. Funkkommunikationsstandard, wie z. B. einen WPAN- bzw. IEEE-Standard oder einen WLAN-Standard, aufweisen. Konkret kann es sich bei dem wenigstens einen Endgerät z. B. um einen Computer, ein Tablet, einen Laptop, ein Smartphone, eine Smartwatch, ein Smartglass, eine Virtual-Reality ("VR") Brille oder ein sonstiges Virtual Reality-Gerät, etc., handeln. Angesprochen sind grundsätzlich sowohl portable als auch nicht-portable Endgeräte. Das wenigstens eine Endgerät ist typischerweise einer Lehrkraft zugeordnet, welche das System zumindest zur Erzeugung von Unterrichtsinhalten, d. h. im Allgemeinen insbesondere zu Erzeugung von Lerninhalten, die einem Schüler durch eine Lehrkraft zu vermitteln sind, und/oder Prüfinhalte, die von einem Schüler durch eine Lehrkraft abzuprüfen sind, nutzen möchte und hierfür über das wenigstens eine Endgerät bzw. ein(e) auf diesem installierte Software bzw. Programm (App) direkt oder indirekt Zugriff auf die in der wenigstens einen Datenspeichereinrichtung gespeicherten Unterrichtsinhaltinformationen erlangen möchte.

Um computertechnisch mit den anderen Bestandteilen des Systems kommunizieren bzw. mit diesen verbunden werden zu können, umfasst das wenigstens eine Endgerät, wie erwähnt, wenigstens eine, z. B. in Form eines Gateways ausgebildete oder ein solches umfassende, Kommunikationseinheit oder - schnittstelle. Die wenigstens eine Kommunikationseinheit oder -schnittstelle kann insbesondere eingerichtet sein, über eine Daten- bzw. Kommunikationsverbindung bzw. ein Kommunikationsnetzwerk, wie z. B. ein Telekommunikationsnetzwerk oder ein Datennetzwerk, wie z. B. das Internet, mit der wenigstens einen Datenspeichereinrichtung und/oder der wenigstens einen Steuereinrichtung zu kommunizieren. Wie angedeutet, kann die wenigstens eine Kommunikationseinheit oder -schnittstelle z. B. eingerichtet sein, eine Drahtlos- bzw. Funkkommunikation über einen Drahtlos- bzw. Funkkommunikationsstandard, wie z. B. einen WPAN- bzw. IEEE-Standard oder einen WLAN-Standard, mit der wenigstens einen Datenspeichereinrichtung und/oder der wenigstens einen Steuereinrichtung zu kommunizieren.

Das wenigstens eine Endgerät ist insbesondere eingerichtet, auf Grundlage von typischerweise über eine hardware- und/oder softwaremäßig implementierte Nutzerschnittstelle, diese kann gegebenenfalls als eine Software bzw. als ein Programm (App) oder ein als Bestandteil eines/einer solchen auf dem wenigstens einen Endgerät installiert sein, getätigten Nutzereingaben Anfragen an die wenigstens eine Datenspeichereinrichtung, betreffend ein oder mehrere von einem Nutzer, insbesondere einer Lehrkraft, geplante Unterrichtsinhaltinformationen zu wenigstens einer geplanten Unterrichtseinheit, zu erzeugen und zu übertragen. Deshalb weist das wenigstens eine Endgerät die wenigstens eine Kommunikationseinheit bzw. -Schnittstelle auf, über welche das wenigstens eine Endgerät mit der wenigstens einen Datenspeichereinrichtung kommunizieren kann. Entsprechende Anfragen können daher über die wenigstens eine endgerätseitige Kommunikationseinheit bzw. -schnittstelle, über welche das wenigstens eine Endgerät mit der wenigstens einen Datenspeichereinrichtung kommunizieren kann, an die wenigstens eine Datenspeichereinrichtung übertragen werden.

Die wenigstens eine Steuereinrichtung ist eingerichtet, eine über die Kommunikationseinheit bzw. - schnittstelle des wenigstens einen Endgeräts an die wenigstens eine Datenspeichereinrichtung zu kommunizierende oder kommunizierte Anfrage im Hinblick auf in der wenigstens einen Datenspeichereinrichtung gespeicherte, zu der Anfrage passende Unterrichtsinhaltinformationen zu wenigstens einer Unterrichtseinheit zu analysieren bzw. auszuwerten, auf Grundlage der Analyse bzw. Auswertung die entsprechenden bzw. korrespondierenden in der wenigstens einen Datenspeichereinrichtung gespeicherten Unterrichtsinhaltinformationen zu der wenigstens einen Unterrichtseinheit auszuwählen, und die ausgewählten Unterrichtsinhaltinformationen zu der wenigstens einen Unterrichtseinheit über die Kommunikationsschnittstelle der wenigstens einen Datenspeichereinrichtung an die Kommunikationsschnittstelle des wenigstens einen Endgeräts zu kommunizieren. Die Kommunikation der vermittels der wenigstens einen Steuereinrichtung ausgewählten Unterrichtsinhaltinformationen zu der wenigstens einen Unterrichtseinheit kann in einem Format erfolgen, in welchem die ausgewählten Unterrichtsinhaltinformationen zu der wenigstens einen Unterrichtseinheit auf dem wenigstens einen Endgerät computertechnisch verarbeitbar, d. h. insbesondere darstellbar und/oder über eine Eingabe- und/oder Ausgabeeinheit bzw. -schnittstelle des wenigstens einen Endgeräts bearbeitbar sind, was nicht nur eine bloße Ausgabe der ausgewählten Unterrichtsinhaltinformationen zu der wenigstens einen Unterrichtseinheit, sondern gegebenenfalls auch eine nutzerseitige Bearbeitung, etwa in Form einer Individualisierung, der ausgewählten Unterrichtsinhaltinformationen zu der wenigstens einen Unterrichtseinheit beinhalten kann.

Eine wesentliche Aufgabe und Funktion der wenigstens einen Steuereinrichtung besteht sonach darin, eine über die Kommunikationsschnittstelle des wenigstens einen Endgeräts an die wenigstens eine Datenspeichereinrichtung zu kommunizierende oder kommunizierte Anfrage im Hinblick auf in der wenigstens einen Datenspeichereinrichtung gespeicherte, zu der Anfrage passende Unterrichtsinhaltinformationen zu wenigstens einer Unterrichtseinheit auszuwerten und auf Grundlage der Auswertung die entsprechenden in der wenigstens einen Datenspeichereinrichtung gespeicherten Unterrichtsinhaltinformationen zu der wenigstens einen Unterrichtseinheit auszuwählen, um die entsprechend ausgewählten Unterrichtsinhaltinformationen zu wenigstens einer Unterrichtseinheit sodann an wenigstens ein Endgerät, insbesondere an das wenigstens eine Endgerät, über welches die der Auswahl zugrunde liegende Anfrage erfolgte, zu kommunizieren.

Die wenigstens eine Steuereinrichtung kann daher wenigstens der wenigstens einen Datenspeichereinrichtung zugeordnet sein, um eine über die Kommunikationseinheit bzw. -schnittstelle des wenigstens einen Endgeräts an die wenigstens eine Datenspeichereinrichtung zu kommunizierende oder kommunizierte Anfrage im Hinblick auf in der wenigstens einen Datenspeichereinrichtung gespeicherte, zu der Anfrage passende Unterrichtsinhaltinformationen zu wenigstens einer Unterrichtseinheit auszuwerten, auf Grundlage der Auswertung die entsprechenden in der wenigstens einen Datenspeichereinrichtung gespeicherten Unterrichtsinhaltinformationen zu der wenigstens einen Unterrichtseinheit auszuwählen, und die ausgewählten Unterrichtsinhaltinformationen zu der wenigstens einen Unterrichtseinheit über die Kommunikationseinheit bzw. -schnittstelle der wenigstens einen Datenspeichereinrichtung an die Kommunikationseinheit bzw. - schnittstelle des wenigstens einen Endgeräts zu kommunizieren.

Die wenigstens eine Steuereinrichtung kann daher insbesondere programmtechnisch entsprechend konfiguriert sein; die wenigstens eine Steuereinrichtung kann sonach z. B. einen oder mehrere Algorithmen oder sonstige programmtechnische Mittel aufweisen, welche eingerichtet sind, eine über die Kommunikationseinheit bzw. -schnittstelle des wenigstens einen Endgeräts an die wenigstens eine Datenspeichereinrichtung zu kommunizierende oder kommunizierte Anfrage im Hinblick auf in der wenigstens einen Datenspeichereinrichtung gespeicherte, zu der Anfrage passende Unterrichtsinhaltinformationen zu wenigstens einer Unterrichtseinheit auszuwerten und eingerichtet sind, auf Grundlage der Auswertung die entsprechenden in der wenigstens einen Datenspeichereinrichtung gespeicherten Unterrichtsinhaltinformationen zu der wenigstens einen Unterrichtseinheit auszuwählen. Eine entsprechende Auswahl kann einem anfragenden Nutzer, z. B. als Vorschlag, an das jeweilige nutzerseitige Endgerät kommuniziert werden.

Bei entsprechenden Algorithmen oder sonstigen programmtechnischen Mitteln kann es sich sonach um Analyse- oder Auswertealgorithmen und/oder Auswahlalgorithmen handeln, welche eingerichtet sind, eine über die Kommunikationseinheit bzw. -schnittstelle des wenigstens einen Endgeräts an die wenigstens eine Datenspeichereinrichtung zu kommunizierende oder kommunizierte Anfrage im Hinblick auf in der wenigstens einen Datenspeichereinrichtung gespeicherte, zu der Anfrage passende Unterrichtsinhaltinformationen zu wenigstens einer Unterrichtseinheit auszuwerten, und welche eingerichtet sind, auf Grundlage der Auswertung, die entsprechenden in der wenigstens einen Datenspeichereinrichtung gespeicherten Unterrichtsinhaltinformationen zu der wenigstens einen Unterrichtseinheit auszuwählen.

Entsprechende Algorithmen können dabei Prinzipien der künstlichen Intelligenz bzw. des maschinellen Lernens sowie mathematische Modelle, insbesondere Sprachmodelle, anwenden bzw. auf Grundlage von Prinzipien der künstlichen Intelligenz bzw. des maschinellen Lernens bzw. mathematischen Modellen, insbesondere Sprachmodellen, trainiert worden sein. Ein entsprechendes Training kann z. B. auf Grundlage von Referenz-Anfragen an eine Referenz-Datenspeichereinrichtung und/oder auf Grundlage von Referenz-Analysen bzw. Referenz-Auswertungen einer Referenz-Datenspeichereinrichtung und/oder auf Grundlage von Referenz-Auswahlen einer Referenz-Datenspeichereinrichtung erfolgen. Gleichermaßen kann ein entsprechendes Training auf Grundlage von Prinzipien des Data-Mining, d. h. der Anwendung statistischer Methoden auf große Datenbestände mit der Zielsetzung, neue Datenverbindungen, wie z. B. Querverbindungen, und Trends zu erkennen, erfolgen. Grundsätzlich sind jedwede Trainingsansätze des maschinellen Lernens denkbar.

Konkret kann ein entsprechendes Training als Eingangsinformationen z. B. wenigstens eine der folgenden Informationen verwenden: Informationen aus bestehenden Unterrichtsinhalten, wie z. B. Schulbüchern, Arbeits- und/oder Übungsheften, sowie sonstigen Bildungsmedien, wie z. B. Enzyklopädien, Sachbüchern, Fachbüchern, wissenschaftlichen Artikeln, Bildungs- oder Wissensplattformen, wie z. B. im Internet verfügbaren Bildungs- oder Wissensplattformen, Unterhaltungsplattformen, wie z. B. im Internet verfügbaren Audio- und/oder Videoplattformen, sozialen Medien, etc.

Die Auswertung und/oder Auswahl kann, insbesondere wenn das System über eigene Sprachmodelle verfügt oder auf externe Sprachmodelle, d. h. z. B. im Internet verfügbare Sprachmodelle, zurückgreift, auf Grundlage von Anfragen bzw. Prompts erfolgen. Entsprechende Sprachmodelle können auf Grundlage entsprechender Anfragen bzw. Prompts, wie im Weiteren erläutert wird, auch eingerichtet sein, neue Informationen zu erzeugen.

Die beschriebene Konfiguration des Systems, welches umfasst: wenigstens eine Datenspeichereinrichtung, in welcher ein oder mehrere Unterrichtsinhaltinformationen zu wenigstens einer Unterrichtseinheit abrufbar gespeichert sind, wobei die wenigstens eine Datenspeichereinrichtung eine Kommunikationseinheit bzw. -schnittstelle aufweist, über welche die wenigstens eine Datenspeichereinrichtung mit wenigstens einem Endgerät eines Nutzers kommunizieren kann; wenigstens ein Endgerät, welches eingerichtet ist, auf Grundlage von Nutzereingaben Anfragen an die wenigstens eine Datenspeichereinrichtung, betreffend ein oder mehrere von einem Nutzer, insbesondere einer Lehrkraft, geplante Unterrichtsinhaltinformationen zu wenigstens einer geplanten Unterrichtseinheit, zu erzeugen, wobei das wenigstens eine Endgerät eine Kommunikationseinheit bzw. -schnittstelle aufweist, über welche das wenigstens eine Endgerät mit der wenigstens einen Datenspeichereinrichtung kommunizieren kann; und wenigstens eine hardware- und/oder softwaremäßig implementierte Steuereinrichtung, welche eingerichtet ist, eine über die Kommunikationseinheit bzw. -schnittstelle des wenigstens einen Endgeräts an die wenigstens eine Datenspeichereinrichtung zu kommunizierende oder kommunizierte Anfrage im Hinblick auf in der wenigstens einen Datenspeichereinrichtung gespeicherte, zu der Anfrage passende Unterrichtsinhaltinformationen zu wenigstens einer Unterrichtseinheit auszuwerten, auf Grundlage der Auswertung die entsprechenden in der wenigstens einen Datenspeichereinrichtung gespeicherten Unterrichtsinhaltinformationen zu der wenigstens einen Unterrichtseinheit auszuwählen, und die ausgewählten Unterrichtsinhaltinformationen zu der wenigstens einen Unterrichtseinheit über die Kommunikationseinheit bzw. -schnittstelle der wenigstens einen Datenspeichereinrichtung an die Kommunikationseinheit bzw. - schnittstelle des wenigstens einen Endgeräts zu kommunizieren, ermöglicht es, wenigstens eine Lehrkraft bei der Erzeugung, Planung und Durchführung von Unterrichtsinhalten computertechnisch implementiert zu unterstützen.

Das System ermöglicht nicht nur die Erzeugung, Planung und Durchführung von Unterrichtsinhalten grundsätzlich einfacher und/oder individueller zu gestalten, sondern auch, technische Mittel, wie z. B. Prinzipien der künstlichen Intelligenz, des maschinellen Lernens, mathematischer Modelle, insbesondere Sprachmodelle, etc. in die die Erzeugung, Planung und Durchführung von Unterrichtsinhalten einzubinden, um - im Vergleich zu einer konventionellen Erzeugung, Planung und Durchführung von Unterrichtsinhalten - die gegebenen computertechnischen Ressourcen effizient bzw. optimal zu nutzen.

Über das System können einem oder mehreren Schülern zudem, insbesondere vor, während und/oder nach, wenigstens einer Unterrichtseinheit, Unterstützung bereitgestellt werden, welche es dem Schüler z. B. ermöglichen können, z. B. computerimplementiert erstellte Zusammenfassungen des bisherigen, aktuellen und/oder künftigen Unterrichtsverlaufs zu erhalten und somit den zu vermittelnden Unterrichtsinhalten besser folgen zu können.

Damit liegt ein verbessertes Kommunikationssystem, zur wenigstens teilautomatisierten Erzeugung von Unterrichtsinhalten sowie gegebenenfalls auch Planung und Durchführung von Unterrichtsinhalten, vor.

Denkbare Ausführungsformen des Systems - diese können grundsätzlich in beliebiger Weise miteinander kombiniert werden - werden nachfolgend in beispielhafter und damit nicht abschließender Weise im Einzelnen dargestellt:
Gemäß einer Ausführungsform des Systems kann die wenigstens eine Steuereinrichtung eingerichtet sein, eine auf dem wenigstens Endgerät, d. h. insbesondere einer Wiedergabeeinheit bzw. -schnittstelle wiedergebbare Nutzeroberfläche zu erzeugen, über welche ein Nutzer Eingaben, betreffend ein oder mehrere von einem Nutzer geplante Unterrichtsinhaltinformationen zu wenigstens einer geplanten Unterrichtseinheit, zu tätigen. Die Nutzeroberfläche kann insbesondere durch die bzw. eine auf dem wenigstens einen Endgerät installierte Software, z. B. in Form einer App, erzeugt werden. Eine entsprechende Software kann einem Nutzer auf einfache Weise computerimplementiert wenigstens bei der Erzeugung und/oder Planung und/oder Durchführung und/oder Auswertung von Unterrichtsinhalten unterstützen.

Eine entsprechende Software bzw. die wenigstens eine Steuereinrichtung im Allgemeinen kann wenigstens eine der folgenden Softwarefunktionen bzw. Funktionen im Allgemeinen aufweisen: ein oder mehrere Personalisierungen, etwa in Form von Begrüßungen eines Nutzers, insbesondere chatbotartig implementierten, Dialogen mit einem Nutzer, ein oder mehrere Nutzerkonten, ein oder mehrere gespeicherte historische Eingaben bzw. Anfragen wenigstens eines Nutzers an die wenigstens eine Datenspeichereinrichtung, einen oder mehrere Entwürfe von Eingaben bzw. Anfragen wenigstens eines Nutzers an die wenigstens eine Datenspeichereinrichtung, eine einen Kalender bzw. Terminplaner abbildende Nutzeroberfläche, insbesondere in Form eines Unterrichtsplaners des wenigstens einen Nutzers, bei welchem es sich, wie erwähnt, typischerweise um eine Lehrkraft handelt, einen Arbeitsstatus wenigstens eines Nutzers zu wenigstens einem von dem wenigstens einen Nutzer zu bearbeitenden Unterrichtsinhalt, einen Vorschlag an wenigstens einen Nutzer zur Gestaltung wenigstens eines Unterrichtsinhalts, d. h. insbesondere eines entsprechenden Lern- und/oder Prüfinhalts, einen Auswertungs- bzw. Bewertungsstatus eines, z. B. im Rahmen einer Prüfung erarbeiteten, Arbeitsergebnisses eines Schülers oder einer Gruppe von Schülern, einen Vergleichsstatus eines, z. B. im Rahmen einer Prüfung erarbeiteten, Arbeitsergebnisses eines ersten Schülers oder einer ersten Gruppe von Schülern mit entsprechenden Arbeitsergebnissen eines zweiten Schülers oder einer zweiten Gruppe von Schülern (was z. B. klassenübergreifend, einrichtungs- bzw. schulübergreifend, länderübergreifend, etc. erfolgen kann), einen Vergleichsstatus eines, z. B. im Rahmen einer Prüfung erarbeiteten, Arbeitsergebnisses eines Schülers oder einer Gruppe von Schülern zu einem ersten Zeitpunkt, etwa am Anfang eines Schuljahres, mit entsprechenden Arbeitsergebnissen des Schülers oder der Gruppe von Schülern zu einem zweiten Zeitpunkt, etwa in der Mitte oder zum Ende des Schuljahres, (was z. B. wiederum klassenübergreifend, einrichtungs- bzw. schulübergreifend, länderübergreifend, etc. erfolgen kann), etc.

Gemäß einer weiteren Ausführungsform des Systems kann die wenigstens eine Steuereinrichtung eingerichtet sein, eine auf dem wenigstens einen Endgerät wiedergebbare Nutzeroberfläche zu erzeugen, über welche ein Nutzer Unterstützung bei Eingaben, betreffend ein oder mehrere von einem Nutzer geplante Unterrichtsinhaltinformationen zu wenigstens einer geplanten Unterrichtseinheit, erhält bzw. erhalten kann. Die Nutzeroberfläche kann insbesondere durch eine auf dem wenigstens einen Endgerät installierte Software, z. B. in Form einer App, erzeugt werden.

Eine entsprechende Software kann einem Nutzer auf einfache Weise computerimplementiert wenigstens bei der Erzeugung und/oder Planung und/oder Durchführung und/oder Auswertung von Unterrichtsinhalten unterstützen. Eine entsprechende Software kann daher wenigstens eine der folgenden Softwarefunktionen aufweisen: z. B. chatbotartig implementierte Dialoge mit einem Nutzer, mit welchem ein Nutzer mit der Software in einen Dialog über geplante Unterrichtsinhalte zu wenigstens einer geplanten Unterrichtseinheit tritt und von der Software, etwa implementiert durch wenigstens ein zugrundeliegendes Sprachmodell, Anregungen, Auskünfte, Hinweise, Vorschläge, etc., zu geplanten Unterrichtsinhalten zu wenigstens einer geplanten Unterrichtseinheit erhält. Die Software kann dem Nutzer z. B. vorschlagen, den Unterrichtsinhalt des Erlernens von bestimmten mathematischen Inhalten einem oder mehreren Schülern z. B. durch bestimmte Beispiele aus Natur und/oder Technik zu vermitteln und dem Nutzer entsprechende Beispiele aus Natur und/oder Technik gleichermaßen vorschlagen. Analoges gilt für andere Unterrichtsinhalte, etwa im Rahmen des Erlernens einer Sprache, naturwissenschaftlicher Inhalte, technischer Inhalte, geschichtlicher Inhalte, sozialwissenschaftlicher Inhalte, rechtlicher Inhalte, wirtschaftlicher Inhalte, medizinischer Inhalte, etc.

Gemäß einer weiteren Ausführungsform des Systems kann die Nutzeroberfläche wenigstens eine der folgenden, insbesondere über Drop-Down-Menüs auswählbaren, Kategorien enthalten: Art und/oder Inhalt der Unterrichtsinhaltinformationen, Art und/oder Inhalt der Unterrichtseinheit, Dauer der Unterrichtseinheit, Ort der Unterrichtseinheit, Zielgruppe der Unterrichtsinhaltinformationen, Zielgruppe der Unterrichtseinheit. Die Art und/oder Inhalt der Unterrichtsinhaltinformationen kann z. B. das Format der Unterrichtsinhaltinformationen, die Sprache der Unterrichtsinhaltinformationen, die Integration von aktiven und/oder passiven Elementen zu den Unterrichtsinhaltinformationen, etc. beinhalten; Entsprechendes gilt für Art und/oder Inhalt der Unterrichtseinheiten.

Gemäß einer weiteren Ausführungsform des Systems kann die wenigstens eine Steuereinrichtung eingerichtet sein, ein oder mehrere in der wenigstens einen Datenspeichereinrichtung gespeicherte Unterrichtsinhaltinformationen zu wenigstens einer Unterrichtseinheit auf Grundlage von Anfragen bzw. Nutzereingaben anzupassen. Die Anfragen bzw. Nutzereingaben können über wenigstens eine Lehrkraft, insbesondere eine Lehrkraft, welche die in der wenigstens einen Datenspeichereinrichtung gespeicherten Unterrichtsinhaltinformationen zu wenigstens einer Unterrichtseinheit z. B. zur Planung, Durchführung und/oder Auswertung wenigstens einer Unterrichtseinheit nutzt, und/oder über wenigstens einen Schüler, insbesondere einen Schüler, welcher an wenigstens einer Unterrichtseinheit, in welcher entsprechende Unterrichtsinhaltinformationen vermittelt werden sollen, teilnehmen soll oder teilnahm, und/oder von einem Dritten, insbesondere einer anderen Lehrkraft, welche die in der wenigstens einen Datenspeichereinrichtung gespeicherten Unterrichtsinhaltinformationen zu wenigstens einer Unterrichtseinheit z. B. zur Planung, Durchführung und/oder Auswertung wenigstens einer Unterrichtseinheit nutzt oder nutzte, erfolgen. Mithin ermöglicht es das System, wenigstens einen Teil der in der wenigstens einen Datenspeichereinrichtung gespeicherten Unterrichtsinhaltinformationen zu wenigstens einer Unterrichtseinheit auf Grundlage von Anfragen bzw. Nutzereingaben anzupassen, etwa um diese im Hinblick auf eine verbesserte Vermittlung eines besonderen Unterrichtsinhalts zu ändern bzw. optimieren, sich als für die Vermittlung eines besonderen Unterrichtsinhalts als geeignet erwiesene Unterrichtsinhaltsinformationen, z. B. durch entsprechende Markierung, Kommentierung, etc., positiv kenntlich zu machen, sich als für die Vermittlung eines besonderen Unterrichtsinhalts als ungeeignet erwiesene Unterrichtsinhaltsinformationen, z. B. durch entsprechende Markierung, Kommentierung, etc., negativ kenntlich zu machen oder gegebenenfalls zu löschen. Einzelne, mehrere oder alle Änderungsvorgänge von Unterrichtsinhaltsinformationen können eine Autorisierung eines jeweiligen Nutzers erfordern, was z. B. durch ein Einloggen eines Nutzers mit einem Passwort und/oder ein Einloggen eines Nutzers über eine, z. B. durch entsprechende Verschlüsselung, sichere Datenverbindung, realisiert werden kann. Einzelne, mehrere oder alle Änderungsvorgänge von Unterrichtsinhaltsinformationen können zudem eine inhaltliche Autorisierung, etwa im Hinblick auf pädagogische Integrität, Plausibilität, erwarteten bzw. prognostizierten Lernerfolg wenigstens eines Schülers, etc. erfordern, was ebenfalls über einen oder mehrere Algorithmen der wenigstens einen Steuereinrichtung möglich sein kann.

Gemäß einer weiteren Ausführungsform des Systems kann die wenigstens eine Steuereinrichtung eingerichtet sein, eine oder mehrere in der wenigstens einen Datenspeichereinrichtung gespeicherte Unterrichtsinhaltinformationen zu wenigstens einer Unterrichtseinheit auf Grundlage von computerimplementierten Operationen automatisiert anzupassen. Die computerimplementierten Operationen können vermittels bzw. auf Grundlage von Algorithmen der wenigstens einen Steuereinrichtung erfolgen, welche eingerichtet sind, die in der wenigstens einen Datenspeichereinrichtung gespeicherten Unterrichtsinhaltinformationen zu wenigstens einer Unterrichtseinheit im Hinblick auf wenigstens ein Zielkriterium zu bewerten. Auf Basis der Bewertung können die computerimplementierten Operationen dahin genutzt werden, um Unterrichtsinhaltsinformationen anzupassen. Auch insoweit können Algorithmen der künstlichen Intelligenz, d. h. insbesondere des maschinellen Lerners, bzw. mathematische Modelle, insbesondere Sprachmodelle, Anwendung finden, welche eingerichtet sind, die in der wenigstens einen Datenspeichereinrichtung gespeicherten Unterrichtsinhaltinformationen zu wenigstens einer Unterrichtseinheit im Hinblick auf wenigstens ein Zielkriterium zu bewerten und im Weiteren eingerichtet sein können, auf Basis der Bewertung Unterrichtsinhaltsinformationen anzupassen. Demnach kann durch entsprechende computerimplementierte Operationen der wenigstens einen Steuereinrichtung, mithin im Allgemeinen computerimplementiert bzw. Algorithmus-basiert, eine, gegebenenfalls (quasi)kontinuierliche, Optimierung - dies kann in einfachen Fällen auch eine bloße Aktualisierung bzw. Ergänzung von Unterrichtsinhaltsinformationen etwa im Hinblick auf einen geänderten Lehrplan beinhalten - der in der wenigstens einen Datenspeichereinrichtung gespeicherten Unterrichtsinhaltinformationen erfolgen, um wenigstens ein Zielkriterium zu erreichen. Ein Nutzer des Systems kann sonach auf Grundlage entsprechender Anfragen stets in der wenigstens einen Datenspeichereinrichtung gespeicherte Unterrichtsinhaltinformationen erhalten, mit welchem der Nutzer eine, gegebenenfalls auf einen oder mehrere Schüler individualisiert optimierte, Unterrichtsgestaltung vornehmen kann, um das wenigstens eine Zielkriterium zu erreichen oder sich in zumindest in Richtung des Zielkriteriums zu bewegen.

Gemäß einer weiteren Ausführungsform des Systems kann es sich bei einem entsprechenden Zielkriterium z. B. um einen angestrebten und/oder erreichten Lernerfolg, gegebenenfalls im Hinblick auf wenigstens einen bestimmten Schüler, handeln. Die wenigstens eine Steuereinrichtung kann sonach eingerichtet sein, auf Grundlage entsprechender Anfragen durch einen Nutzer Unterrichtsinhaltsinformationen auszuwählen, welche es dem Nutzer ermöglichen, dass ein oder mehrere bestimmte Schüler einen angestrebten Lernerfolg, z. B. durch entsprechende Übungen, Wiederholungen, etc., erreichen und/oder einen erreichten Lernerfolg, z. B. durch entsprechende Übungen, Wiederholungen, etc., nicht wieder verlieren. Mit anderen Worten können Unterrichtsinhaltsinformationen vermittels der wenigstens einen Steuereinrichtung adaptiv bzw. individuell für einen oder mehrere bestimmte Schüler ausgewählt werden, was es dem Nutzer ermöglichen kann, einem oder mehreren bestimmten Schülern die entsprechenden Unterrichtsinhalte, insbesondere adaptiv bzw. individuell, so zu vermitteln, dass ein angestrebter Lernerfolg, z. B. durch entsprechende Übungen, Wiederholungen, etc., erreicht und/oder ein erreichter Lernerfolg, z. B. durch entsprechende Übungen, Wiederholungen, etc., nicht wieder verloren werden kann.

Gemäß einer weiteren Ausführungsform des Systems kann die wenigstens eine Steuereinrichtung eingerichtet sein, eine oder mehrere neue Unterrichtsinhaltinformationen zu wenigstens einer Unterrichtseinheit auf Grundlage von Nutzereingaben zu erzeugen und in der wenigstens einen Datenspeichereinrichtung zu speichern, wobei die Nutzereingaben über wenigstens eine Lehrkraft, insbesondere eine Lehrkraft, welche die in der wenigstens einen Datenspeichereinrichtung gespeicherten Unterrichtsinhaltinformationen zu wenigstens einer Unterrichtseinheit zur Planung, Durchführung und/oder Auswertung wenigstens einer Unterrichtseinheit nutzt, und/oder über wenigstens einen Schüler, insbesondere einen Schüler, welcher an wenigstens einer Unterrichtseinheit, in welcher entsprechende Unterrichtsinhaltinformationen vermittelt werden sollen, teilnehmen soll oder teilnahm, und/oder von einem Dritten, insbesondere einer anderen Lehrkraft, welche die in der wenigstens einen Datenspeichereinrichtung gespeicherten Unterrichtsinhaltinformationen zu wenigstens einer Unterrichtseinheit zur Planung, Durchführung und/oder Auswertung wenigstens einer Unterrichtseinheit nutzt oder nutzte, erfolgen. Mithin ermöglicht es das System, wenigstens einen Teil der in der wenigstens einen Datenspeichereinrichtung gespeicherten Unterrichtsinhaltinformationen zu wenigstens einer Unterrichtseinheit auf Grundlage von Anfragen bzw. Nutzereingaben neu zu erzeugen, etwa um eine verbesserte Vermittlung eines besonderen Unterrichtsinhalts zu ermöglichen bzw. optimieren, Einzelne, mehrere oder alle Neuerzeugungsvorgänge von Unterrichtsinhaltsinformationen können eine Autorisierung eines jeweiligen Nutzers erfordern, was z. B. durch ein Einloggen eines Nutzers mit einem Passwort und/oder ein Einloggen eines Nutzers über eine, z. B. durch entsprechende Verschlüsselung, sichere Datenverbindung, realisiert werden kann. Einzelne, mehrere oder alle Neuerzeugungsvorgänge von Unterrichtsinhaltsinformationen können zudem eine inhaltliche Autorisierung, etwa im Hinblick auf pädagogische Integrität, Plausibilität, erwarteten bzw. prognostizierten Lernerfolg wenigstens eines Schülers, etc. erfordern, was ebenfalls über einen oder mehrere Algorithmen der wenigstens einen Steuereinrichtung möglich sein kann.

Gemäß einer weiteren Ausführungsform des Systems kann die wenigstens eine Steuereinrichtung eingerichtet sein, ein oder mehrere neue Unterrichtsinhaltinformationen zu wenigstens einer Unterrichtseinheit auf Grundlage von computerimplementierten Operationen automatisiert zu erzeugen und in der wenigstens einen Datenspeichereinrichtung zu speichern. Die computerimplementierten Operationen können auf Grundlage von Algorithmen erfolgen, welche eingerichtet sind, die in der wenigstens einen Datenspeichereinrichtung gespeicherten Unterrichtsinhaltinformationen zu wenigstens einer Unterrichtseinheit im Hinblick auf wenigstens ein Zielkriterium zu bewerten. Auf Basis der Bewertung können die computerimplementierten Operationen dahin genutzt werden, um Unterrichtsinhalte neu zu erzeugen. Auch insoweit können Algorithmen der künstlichen Intelligenz, d. h. insbesondere des maschinellen Lerners, bzw. mathematische Modelle, insbesondere Sprachmodelle, Anwendung finden, welche eingerichtet sind, die in der wenigstens einen Datenspeichereinrichtung gespeicherten Unterrichtsinhaltinformationen zu wenigstens einer Unterrichtseinheit im Hinblick auf wenigstens ein Zielkriterium zu bewerten und im Weiteren eingerichtet sein können, auf Basis der Bewertung Unterrichtsinhalte neu zu erzeugen. Demnach kann durch entsprechende computerimplementierte Operationen der wenigstens einen Steuereinrichtung, mithin im Allgemeinen computerimplementiert bzw. Algorithmus-basiert, eine, gegebenenfalls (quasi)kontinuierliche, Optimierung - dies kann in einfachen Fällen auch eine bloße Ergänzung von Unterrichtsinhalten etwa im Hinblick auf einen geänderten Lehrplan beinhalten - der in der wenigstens einen Datenspeichereinrichtung gespeicherten Unterrichtsinhaltinformationen erfolgen, um wenigstens ein Zielkriterium zu erreichen. Ein Nutzer des Systems kann sonach auf Grundlage entsprechender Anfragen stets in der wenigstens einen Datenspeichereinrichtung gespeicherte Unterrichtsinhaltinformationen erhalten, mit welchem der Nutzer eine, gegebenenfalls auf einen oder mehrere Schüler individualisiert optimierte, Unterrichtsgestaltung vornehmen kann, um das wenigstens eine Zielkriterium zu erreichen oder sich in zumindest in Richtung des Zielkriteriums zu bewegen.

Gemäß einer weiteren Ausführungsform des Systems kann es sich bei dem wenigstens einen Zielkriterium um einen angestrebten und/oder erreichten Lernerfolg, gegebenenfalls im Hinblick auf wenigstens einen Schüler, handeln. Die wenigstens eine Steuereinrichtung kann sonach eingerichtet sein, auf Grundlage entsprechender computerimplementierter Operationen der wenigstens einen Steuereinrichtung Anfragen durch einen Nutzer Unterrichtsinhalte neu zu erzeugen, welche es dem Nutzer ermöglichen, dass ein oder mehrere bestimmte Schüler einen angestrebten Lernerfolg, z. B. durch entsprechende Übungen, Wiederholungen, etc., erreichen und/oder einen erreichten Lernerfolg, z. B. durch entsprechende Übungen, Wiederholungen, etc., nicht wieder verlieren. Mit anderen Worten können Unterrichtsinhalte vermittels der wenigstens einen Steuereinrichtung adaptiv bzw. individuell für einen oder mehrere bestimmte Schüler neu erzeugt werden, was es dem Nutzer ermöglichen kann, einem oder mehreren bestimmten Schüler(n) die entsprechenden Unterrichtsinhalte, insbesondere adaptiv bzw. individuell, so zu vermitteln, dass ein angestrebter Lernerfolg, z. B. durch entsprechende Übungen, Wiederholungen, etc., erreicht und/oder ein erreichter Lernerfolg, z. B. durch entsprechende Übungen, Wiederholungen, etc., nicht wieder verloren werden kann.

Gemäß einer weiteren Ausführungsform des Systems kann das wenigstens eine Endgerät eingerichtet sein, mit der wenigstens einen Datenspeichereinrichtung zu kommunizieren, um auf Grundlage von Nutzereingaben erzeugte Bewertungen, betreffend ein oder mehrere, in der wenigstens einen Datenspeichereinrichtung gespeicherte Unterrichtsinhaltinformationen zu wenigstens einer geplanten Unterrichtseinheit, vorzunehmen. Das System ermöglicht es sonach nicht nur Unterrichtsinhaltinformationen zu wenigstens einer geplanten Unterrichtseinheit anzupassen bzw. neu zu erzeugen, sondern auch zu bewerten, was es einem Nutzer oder einem Algorithmus ermöglichen kann, nur solche Unterrichtsinhaltinformationen zu wenigstens einer geplanten Unterrichtseinheit auszuwählen bzw. zu verwenden, welche, z. B. qualitativ und/oder quantitativ betrachtet, bestimmte Bewertungen, d. h. insbesondere positive Bewertungen, aufweisen. Derart kann z. B. sichergestellt werden, dass einem Nutzer solche Unterrichtsinhaltinformationen zu wenigstens einer geplanten Unterrichtseinheit ausgewählt und übermittelt werden, mit welchen z. B. eine Realisierung von bestimmten Lernerfolgen wahrscheinlich ist. Einzelne, mehrere oder alle Bewertungsvorgänge von Unterrichtsinhaltsinformationen können eine Autorisierung eines jeweiligen Nutzers erfordern, was z. B. durch ein Einloggen eines Nutzers mit einem Passwort und/oder ein Einloggen eines Nutzers über eine, z. B. durch entsprechende Verschlüsselung, sichere Datenverbindung, realisiert werden kann. Einzelne, mehrere oder alle Bewertungsvorgänge von Unterrichtsinhaltsinformationen können zudem eine inhaltliche Autorisierung, etwa im Hinblick auf pädagogische Integrität, Plausibilität, etc. erfordern, was ebenfalls über einen oder mehrere Algorithmen der wenigstens einen Steuereinrichtung möglich sein kann.

Gemäß einer weiteren Ausführungsform des Systems kann die Bewertung von Unterrichtsinhaltinformationen zu wenigstens einer geplanten Unterrichtseinheit im Hinblick auf wenigstens ein Bewertungskriterium erfolgen. Bei einem Bewertungskriterium kann es sich z. B. um ein Kriterium handeln, welches die Wahrscheinlichkeit des Erreichens bzw. Aufrechterhaltens eines bestimmten gewünschten Lernerfolgs anzeigt. Konkret kann eine Bewertung einer Unterrichtsinhaltinformation zu wenigstens einer geplanten Unterrichtseinheit sonach anzeigen, dass mit dieser Unterrichtsinhaltsinformation eine hohe Wahrscheinlichkeit des Erreichens bzw. Aufrechterhaltens eines bestimmten gewünschten Lernerfolgs verknüpft ist. Derart können sich als für die Vermittlung eines besonderen Unterrichtsinhalts als geeignet erwiesene Unterrichtsinhaltsinformationen durch entsprechende Bewertung von als für die Vermittlung eines besonderen Unterrichtsinhalts als ungeeignet erwiesenen Unterrichtsinhaltsinformationen unterschieden werden. Es ist sogar denkbar, dass Letztere unter bestimmten Bedingungen, d. h. z. B. bei einer bestimmten Anzahl an negativen Bewertungen, automatisiert gelöscht werden können, was ebenfalls über einen oder mehrere Algorithmen der wenigstens einen Steuereinrichtung möglich sein kann.

Gemäß einer weiteren Ausführungsform des Systems kann die wenigstens eine Steuereinrichtung eingerichtet sein, Arbeitsergebnisse, diese können z. B. mündlich und/oder textlich erfolgen und z. B. mittels lehrkraft- und/oder schülerseitigen Endgeräten erfasst werden, von einem oder mehreren Schülern, insbesondere im Rahmen von mündlichen und/oder schriftlichen Prüfungen, im Hinblick auf wenigstens ein Auswertungskriterium, insbesondere ein die Qualität eines Lernerfolgs beschreibendes Qualitätskriterium, auszuwerten und eine die Auswertung bzw. Bewertung der Arbeitsergebnisse beschreibende Schülerbewertungsinformation zu erzeugen. Entsprechende Schülerbewertungsinformationen können ebenso in der wenigstens einen Datenspeichereinrichtung gespeichert werden. Die wenigstens eine Steuereinrichtung kann zudem eingerichtet sein, eine oder mehrere entsprechende Schülerbewertungsinformationen mit einer oder mehreren Unterrichtsinhaltsinformationen (und umgekehrt) zu verknüpfen, d. h. insbesondere zu korrelieren, um eine Korrelation zwischen bestimmten Unterrichtsinhaltsinformationen und der Auswertung bzw. Bewertung von Arbeitsergebnissen von einem oder mehreren Schülern herzustellen. Eine entsprechende Auswertung und/oder Korrelation kann wiederum über Algorithmen der wenigstens einen Steuereinrichtung erfolgen, welche z. B. eingerichtet sind, eine oder mehrere Schülerbewertungsinformationen mit einer oder mehreren Unterrichtsinhaltsinformationen (und umgekehrt) zu verknüpfen, d. h. insbesondere zu korrelieren, um eine Korrelation zwischen bestimmten Unterrichtsinhaltsinformationen und der Auswertung von Arbeitsergebnissen von einem oder mehreren Schülern herzustellen. Entsprechende Algorithmen können dabei Prinzipien der künstlichen Intelligenz bzw. des maschinellen Lernens sowie mathematische Modelle, insbesondere Sprachmodelle, anwenden bzw. auf Grundlage von Prinzipien der künstlichen Intelligenz bzw. des maschinellen Lernens bzw. mathematischen Modellen, insbesondere Sprachmodellen, trainiert worden sein.

Gemäß einer weiteren Ausführungsform des Systems kann die wenigstens eine Steuereinrichtung eingerichtet sein, wenigstens eine entsprechende Schülerbewertungsinformation bei der Auswahl von in der wenigstens einen Datenspeichereinrichtung gespeicherten Unterrichtsinhaltinformationen zu wenigstens einer Unterrichtseinheit zu berücksichtigen. Dies kann auf Grundlage der vorstehend beschriebenen Auswertung und/oder Korrelation zwischen bestimmten Unterrichtsinhaltsinformationen und der Auswertung von Arbeitsergebnissen von einem oder mehreren Schülern erfolgen, um sicherzustellen, dass nur solche Unterrichtsinhaltinformationen zu wenigstens einer Unterrichtseinheit ausgewählt werden, welche sich, z. B. in der Vergangenheit, insbesondere in ähnlichen pädagogischen Aufgabestellungen, als erfolgreich erwiesen haben, um einem oder mehreren Schülern bestimmte Unterrichtsinhalte zu wenigstens einer Unterrichtseinheit zu vermitteln.

Gemäß einer weiteren Ausführungsform des Systems kann die wenigstens eine Steuereinrichtung eingerichtet sein, Beiträge, diese können z. B. mündlich und/oder textlich erfolgen und z. B. mittels lehrkraft- und/oder schülerseitigen Endgeräten erfasst werden, von einem oder mehreren Schülern, insbesondere im Rahmen der Teilnahme an wenigstens einer Unterrichtseinheit, im Hinblick auf wenigstens ein Auswertungskriterium, insbesondere ein die Qualität eines Lernerfolgs beschreibendes Qualitätskriterium, auszuwerten und eine die Auswertung der Beiträge beschreibende Schülerauswertungsinformation zu erzeugen. Die wenigstens eine Steuereinrichtung kann sonach eingerichtet sein, insbesondere unmittelbare, Beiträge eines oder mehrerer Schüle, diese können z. B. über entsprechende Eingaben an schülerseitigen Endgeräten, wie z. B. einem Computer, einem Tablet, einem Laptop, einem Smartphone, einer Smartwatch, einem Smartglass, einer Virtual-Reality ("VR")-Brille oder sonstigem Virtual Reality-Gerät, etc., getätigt und über entsprechende Datenübertragung, gegebenenfalls in Echtzeit, gegebenenfalls anonymisiert oder personalisiert, an die wenigstens eine Steuereinrichtung übertragen werden, im Hinblick auf wenigstens ein Auswertungskriterium, insbesondere ein die Qualität eines Lernerfolgs beschreibendes Qualitätskriterium, auszuwerten und eine die Auswertung der Beiträge beschreibende Schülerauswertungsinformation zu erzeugen. Auch hierfür kann die wenigstens eine Steuereinrichtung Algorithmen umfassen, welche eingerichtet sind, Beiträge von einem oder mehreren Schülern, insbesondere im Rahmen der Teilnahme an wenigstens einer Unterrichtseinheit, im Hinblick auf wenigstens ein Auswertungskriterium, insbesondere ein die Qualität eines Lernerfolgs beschreibendes Qualitätskriterium, auszuwerten und eine die Auswertung der Beiträge beschreibende Schülerauswertungsinformation zu erzeugen. Entsprechende Algorithmen können dabei Prinzipien der künstlichen Intelligenz bzw. des maschinellen Lernens sowie mathematische Modelle, insbesondere Sprachmodelle, anwenden bzw. auf Grundlage von Prinzipien der künstlichen Intelligenz bzw. des maschinellen Lernens bzw. mathematischen Modellen, insbesondere Sprachmodellen, trainiert worden sein.

Gemäß einer weiteren Ausführungsform des Systems kann die wenigstens eine Steuereinrichtung zudem eingerichtet sein, eine oder mehrere entsprechende Schülerauswertungsinformationen mit einer oder mehreren Unterrichtsinhaltsinformationen (und umgekehrt) zu verknüpfen, d. h. insbesondere zu korrelieren, um eine Korrelation zwischen bestimmten Unterrichtsinhaltsinformationen und der Auswertung von Beiträgen von einem oder mehreren Schülern herzustellen. Eine entsprechende Korrelation kann wiederum über Algorithmen erfolgen, welche eingerichtet sind, eine oder mehrere Schülerauswertungsinformationen mit einer oder mehreren Unterrichtsinhaltsinformationen (und umgekehrt) zu verknüpfen, d. h. insbesondere zu korrelieren, um eine Korrelation zwischen bestimmten Unterrichtsinhaltsinformationen und der Auswertung von Beiträgen von einem oder mehreren Schülern herzustellen. Entsprechende Algorithmen können dabei Prinzipien der künstlichen Intelligenz bzw. des maschinellen Lernens sowie mathematische Modelle, insbesondere Sprachmodelle, anwenden bzw. auf Grundlage von Prinzipien der künstlichen Intelligenz bzw. des maschinellen Lernens bzw. mathematischen Modellen, insbesondere Sprachmodellen, trainiert worden sein.

Gemäß einer weiteren Ausführungsform des Systems kann die wenigstens eine Steuereinrichtung eingerichtet sein, wenigstens eine entsprechende Schülerauswertungsinformation bei der Auswahl von in der wenigstens einen Datenspeichereinrichtung gespeicherten Unterrichtsinhaltinformationen zu wenigstens einer Unterrichtseinheit zu berücksichtigen. Dies kann auf Grundlage der vorstehend beschriebenen Auswertung und/oder Korrelation zwischen bestimmten Unterrichtsinhaltsinformationen und der Auswertung von Beiträgen von einem oder mehreren Schülern erfolgen, um sicherzustellen, dass nur solche Unterrichtsinhaltinformationen zu wenigstens einer Unterrichtseinheit ausgewählt werden, welche sich, z. B. in der Vergangenheit, insbesondere in ähnlichen pädagogischen Aufgabestellungen, als erfolgreich erwiesen haben, um einem oder mehreren Schülern bestimmte Unterrichtsinhalte zu wenigstens einer Unterrichtseinheit zu vermitteln.

Gemäß einer weiteren Ausführungsform des Systems kann die wenigstens eine Steuereinrichtung eingerichtet sein, auf Grundlage von einer oder mehreren Schülerauswertungsinformationen (alternativ oder ergänzend kann dies auf Grundlage von einer oder mehreren Schülerbewertungsinformationen erfolgen) für wenigstens einen Schüler eine individuelle Auswahl von Unterrichtsinhaltinformationen zu wenigstens einer Unterrichtseinheit auszuwählen, insbesondere um den wenigstens einen Schüler gezielt in seinem Leistungsniveau zu verbessern. Die wenigstens eine Steuereinrichtung kann sonach eingerichtet sein, eine Lehrkraft bei der Planung von Unterrichtsinhalten so zu unterstützen, dass für wenigstens einen Schüler individuell und damit gezielt Unterrichtsinhaltinformationen zu wenigstens einer Unterrichtseinheit ausgewählt werden, auf Grundlage welcher der wenigstens eine Schüler unterrichtet werden kann. Dies ermöglicht eine hochindividualisierte Planung, Durchführung und Auswertung von Unterrichtsinhalten zu wenigstens einer Unterrichtseinheit, denn es ist im Prinzip möglich, jedem Schüler einer Gruppe von Schülern, insbesondere an das jeweilige Leistungs- bzw. Lernniveau angepasst, individuell und damit gezielt Unterrichtsinhaltinformationen zu wenigstens einer Unterrichtseinheit bereitzustellen. Die wenigstens eine Steuereinrichtung kann sonach nicht nur eingerichtet sein, auf Grundlage von einer oder mehreren Schülerauswertungsinformationen für wenigstens einen Schüler eine individuelle Auswahl von Unterrichtsinhaltinformationen zu wenigstens einer Unterrichtseinheit auszuwählen, insbesondere um den wenigstens einen Schüler gezielt in seinem Leistungsniveau zu verbessern, sondern auch eingerichtet sein, die entsprechend ausgewählten Unterrichtsinhaltinformationen zu wenigstens einer Unterrichtseinheit an ein jeweiliges schülerseitiges Endgerät zu übermitteln und dem jeweiligen Schüler sonach bereitzustellen. Dies kann ebenso über eine, z. B. drahtgebundene oder drahtlose, Daten- bzw. Kommunikationsverbindung bzw. über wenigstens ein, z. B. drahtgebundenes oder drahtloses, Kommunikationsnetzwerk direkt oder indirekt erfolgen, über welches der Schüler vor, während und/oder nach einer Unterrichtseinheit gleichermaßen, insbesondere bidirektional, mit der Lehrkraft LK und/oder mit anderen Schülern kommunizieren kann, z.B. durch Meldung oder Rückmeldung an die Lehrkraft.

Gemäß einer weiteren Ausführungsform des Systems kann die wenigstens eine Steuereinrichtung eingerichtet sein, auf Grundlage von einer oder mehreren Schülerauswertungsinformationen (alternativ oder ergänzend kann dies auf Grundlage von einer oder mehreren Schülerbewertungsinformationen erfolgen) für wenigstens eine Schulklasse oder sonstigen Gruppierung von Schülern eine individuelle Auswahl von Unterrichtsinhaltinformationen zu wenigstens einer Unterrichtseinheit auszuwählen, insbesondere um die wenigstens eine Schulklasse in ihrem Leistungsniveau zu verbessern. Die wenigstens eine Steuereinrichtung kann sonach eingerichtet sein, eine Lehrkraft bei der Planung, Durchführung und Auswertung von Unterrichtsinhalten so zu unterstützen, dass für wenigstens eine Schulklasse individuell und damit gezielt Unterrichtsinhaltinformationen zu wenigstens einer Unterrichtseinheit ausgewählt werden, auf Grundlage welcher die wenigstens eine Schulklasse unterrichtet werden kann. Dies ermöglicht eine hochindividualisierte Planung, Durchführung und Auswertung von Unterrichtsinhaltinformationen zu wenigstens einer Unterrichtseinheit, denn es ist im Prinzip möglich, jeder Schulklasse, insbesondere an das jeweilige Leistungs- bzw. Lernniveau angepasst, individuell und damit gezielt Unterrichtsinhaltinformationen zu wenigstens einer Unterrichtseinheit bereitzustellen. Die wenigstens eine Steuereinrichtung kann sonach nicht nur eingerichtet sein, auf Grundlage von einer oder mehreren Schülerauswertungsinformationen (alternativ oder ergänzend kann dies auf Grundlage von einer oder mehreren Schülerbewertungsinformationen erfolgen) für wenigstens eine Schulklasse eine individuelle Auswahl von Unterrichtsinhaltinformationen zu wenigstens einer Unterrichtseinheit auszuwählen, insbesondere um die wenigstens eine Schulklasse gezielt in ihrem Leistungsniveau zu verbessern, sondern auch eingerichtet sein, die entsprechend ausgewählten Unterrichtsinhaltinformationen zu wenigstens einer Unterrichtseinheit an die schülerseitigen Endgeräte der Schüler der jeweiligen Schulklasse zu übermitteln und der jeweiligen Schulklasse sonach bereitzustellen. Dies kann ebenso über eine, z. B. drahtgebundene oder drahtlose, Daten- bzw. Kommunikationsverbindung bzw. über wenigstens ein, z. B. drahtgebundenes oder drahtloses, Kommunikationsnetzwerk direkt oder indirekt erfolgen.

Gemäß einer weiteren Ausführungsform des Systems kann die wenigstens eine Steuereinrichtung eingerichtet sein, Arbeitsergebnisse von einer oder mehreren Lehrkräften, insbesondere im Rahmen der Durchführung von mündlichen und/oder schriftlichen Prüfungen, im Hinblick auf wenigstens ein Auswertungskriterium, insbesondere ein die Qualität eines Lernerfolgs beschreibendes Qualitätskriterium, auszuwerten und eine die Auswertung der Lehrkraftarbeitsergebnisse beschreibende Lehrkraftauswertungsinformation zu erzeugen. Entsprechende Lehrkraftwertungsinformationen können ebenso in der wenigstens einen Datenspeichereinrichtung gespeichert werden. Die wenigstens eine Steuereinrichtung kann zudem eingerichtet sein, eine oder mehrere entsprechende Lehrkraftauswertungsinformationen mit einer oder mehreren Unterrichtsinhaltsinformationen (und umgekehrt) zu verknüpfen, d. h. insbesondere zu korrelieren, um eine Korrelation zwischen bestimmten Unterrichtsinhaltsinformationen und der Auswertung von Arbeitsergebnissen von einem oder mehreren Lehrkräften herzustellen. Eine entsprechende Auswertung und/oder Korrelation kann wiederum über Algorithmen erfolgen, welche z. B. eingerichtet sind, eine oder mehrere Lehrkraftauswertungsinformationen mit einer oder mehreren Unterrichtsinhaltsinformationen (und umgekehrt) zu verknüpfen, d. h. insbesondere zu korrelieren, um eine Korrelation zwischen bestimmten Unterrichtsinhaltsinformationen und der Auswertung von Arbeitsergebnissen von einer oder mehreren Lehrkräften herzustellen. Entsprechende Algorithmen können dabei Prinzipien der künstlichen Intelligenz bzw. des maschinellen Lernens sowie mathematische Modelle, insbesondere Sprachmodelle, anwenden bzw. auf Grundlage von Prinzipien der künstlichen Intelligenz bzw. des maschinellen Lernens bzw. mathematischen Modellen, insbesondere Sprachmodellen, trainiert worden sein.

Gemäß einer weiteren Ausführungsform des Systems kann die wenigstens eine Steuereinrichtung eingerichtet sein, die Lehrkraftauswertungsinformation bei der Auswahl von in der wenigstens einen Datenspeichereinrichtung gespeicherten Unterrichtsinhaltinformationen zu wenigstens einer Unterrichtseinheit zu berücksichtigen. Dies kann auf Grundlage der vorstehend beschriebenen Auswertung und/oder Korrelation zwischen bestimmten Unterrichtsinhalten und der Auswertung von Arbeitsergebnissen von einem oder mehreren Lehrkräften erfolgen, um sicherzustellen, dass nur solche Unterrichtsinhaltinformationen zu wenigstens einer Unterrichtseinheit ausgewählt werden, welche sich, z. B. in der Vergangenheit, insbesondere in ähnlichen pädagogischen Aufgabestellungen, als erfolgreich erwiesen haben, um einem oder mehreren Schülern bestimmte Unterrichtsinhalte zu wenigstens einer Unterrichtseinheit zu vermitteln.

Gemäß einer weiteren Ausführungsform des Systems kann die wenigstens eine Steuereinrichtung eingerichtet sein, auf Grundlage von ausgewählten in der wenigstens einen Datenspeichereinrichtung gespeicherten Unterrichtsinhaltinformationen zu der wenigstens einen Unterrichtseinheit, automatisiert in einer Unterrichtseinheit verwendbare Inhalte, d. h. insbesondere elektronische bzw. computertechnisch verarbeitbare Inhalte, weiter insbesondere Dokumente, wie z. B. Arbeitsdokumente, Aufgaben- und Testdokumente, Kontrolldokumente, Präsentationen, interaktive Inhalte, Quiz, Rätsel, lernfördernde Spiele, etc., zu erzeugen, die die ausgewählten Unterrichtsinhaltinformationen zu der wenigstens einen Unterrichtseinheit beinhalten, und über die Kommunikationseinheit bzw. -schnittstelle der wenigstens einen Datenspeichereinrichtung an die Kommunikationseinheit bzw. -schnittstelle des wenigstens Endgeräts zu kommunizieren. Bei entsprechenden von der wenigstens einen Steuereinrichtung auswählbaren bzw. erzeugbaren Unterrichtsinhaltinformationen kann es sich in allen Ausführungsformen des Systems sonach beispielhaft und damit nicht abschließend um elektronische bzw. computertechnisch verarbeitbare Inhalte, weiter insbesondere Dokumente, wie z. B. Arbeitsdokumente, Aufgaben- und Testdokumente, Kontrolldokumente, Präsentationen, interaktive Inhalte, Quiz, Rätsel, lernfördernde Spiele, etc. handeln. Entsprechende Inhalte können prinzipiell auch an die Endgeräte von Schülern und/oder anderen Lehrkräften übertragen werden.

Gemäß einer weiteren Ausführungsform des Systems kann die wenigstens eine Steuereinrichtung eingerichtet sein, auf Grundlage wenigstens einer Schülerbewertungsinformationen und/oder wenigstens einer Schülerauswertungsinformation und/oder wenigstens einer Unterrichtsinhaltinformation, insbesondere individualisierte, Lerninhalte und/oder Lernpläne für wenigstens einen Schüler zu erzeugen. Das System ermöglicht es damit, auf Grundlage von in der Schule bzw. einer sonstigen Einrichtung erbrachten Aktivitäten bzw. Leistungen eines Schülers, welche, wie beschrieben, insbesondere durch entsprechende Schülerbewertungsinformationen und/oder Schülerauswertungsinformationen abgebildet bzw. beschrieben werden können, Lerninhalte und/oder Lernpläne für den wenigstens einen Schüler zu erzeugen, welche der wenigstens eine Schüler außerhalb der Schule, d. h. insbesondere zuhause, z. B. in Form von Übungen, Hausaufgaben, etc., abarbeiten bzw. bearbeiten kann. Derart können Aktivitäten bzw. Leistungen eines Schülers innerhalb der Schule direkt mit Lerninhalten und/oder Lernplänen für den wenigstens einen Schüler außerhalb der Schule verknüpft werden, und umgekehrt, was eine umfassende individualisierte Vermittlung von Unterrichts- und Lerninhalten, hierunter sind z. B. Übungen, Hausaufgaben, etc. zu verstehen, ermöglicht. Entsprechendes kann gleichermaßen für eine individualisierte Betreuung einer Gruppe von Schülern, d. h. z. B. einer Schulklasse, gelten.

Das System kann grundsätzlich im Kontext einer schulischen Vermittlung von Unterrichtsinhalten verwendet reden; denkbar sind jedoch ebenso Anwendungsfälle in einem außerschulischen Kontext, sodass neben der Verwendung in Schulen die Verwendung in akademischen Einrichtungen, wie z. B. Universitäten, Kindergärten, sonstigen privaten oder staatlichen Bildungseinrichtungen, wie z. B. Volkshochschulen, Fachhochschulen, Ausbildungszentren, sonstigen privaten oder staatlichen sozialen Lehreinrichtungen, Betrieben, insbesondere solchen mit eigenen Fortbildungsabteilungen, sonstigen privaten oder staatlichen Einrichtungen, in welchen Unterrichtsinhalte vermittelt werden, z. B. medizinischen Einrichtungen, wie z. B. Krankenhäusern, Pflegeheime, etc. denkbar ist.

Ein zweiter Aspekt der Erfindung betrifft ein Verfahren zur wenigstens teilautomatisierten Erzeugung von Unterrichtsinhalten bzw. Unterrichtsinhaltsinformationen, insbesondere für Schüler, welches einen oder mehrere der folgenden Schritte umfasst: Speichern, vermittels wenigstens einer Datenspeichereinrichtung, einer oder mehrerer Unterrichtsinhaltinformationen zu wenigstens einer Unterrichtseinheit, wobei die wenigstens eine Datenspeichereinrichtung eine Kommunikationseinheit bzw. -schnittstelle aufweist, über welche die wenigstens eine Datenspeichereinrichtung mit wenigstens einem Endgerät eines Nutzers kommunizieren kann; Erzeugen, vermittels wenigstens einem Endgerät, welches eingerichtet ist, auf Grundlage von Nutzereingaben Anfragen an die wenigstens eine Datenspeichereinrichtung, betreffend ein oder mehrere von einem Nutzer, insbesondere einer Lehrkraft, geplante Unterrichtsinhaltinformationen zu wenigstens einer geplanten Unterrichtseinheit, zu erzeugen, wobei das wenigstens eine Endgerät eine Kommunikationseinheit bzw. -schnittstelle aufweist, über welche das wenigstens eine Endgerät mit der wenigstens einen Datenspeichereinrichtung kommunizieren kann, von Anfragen an die wenigstens eine Datenspeichereinrichtung, betreffend ein oder mehrere von einem Nutzer, insbesondere einer Lehrkraft, geplante Unterrichtsinhaltinformationen zu wenigstens einer geplanten Unterrichtseinheit; Auswerten, vermittels wenigstens einer hardware- und/oder softwaremäßig implementierten Steuereinrichtung, welche eingerichtet ist, eine über die Kommunikationseinheit bzw. -schnittstelle des wenigstens einen Endgeräts an die wenigstens eine Datenspeichereinrichtung zu kommunizierende oder kommunizierte Anfrage im Hinblick auf in der wenigstens einen Datenspeichereinrichtung gespeicherte, zu der Anfrage passende Unterrichtsinhaltinformationen zu wenigstens einer Unterrichtseinheit auszuwerten, auf Grundlage der Auswertung die entsprechenden in der wenigstens einen Datenspeichereinrichtung gespeicherten Unterrichtsinhaltinformationen zu der wenigstens einen Unterrichtseinheit auszuwählen, und die ausgewählten Unterrichtsinhaltinformationen zu der wenigstens einen Unterrichtseinheit über die Kommunikationseinheit bzw. -schnittstelle der wenigstens einen Datenspeichereinrichtung an die Kommunikationseinheit bzw. - schnittstelle des wenigstens einen Endgeräts zu kommunizieren, einer über die Kommunikationseinheit bzw. -schnittstelle des wenigstens einen Endgeräts an die wenigstens eine Datenspeichereinrichtung zu kommunizierenden oder kommunizierten Anfrage im Hinblick auf in der wenigstens einen Datenspeichereinrichtung gespeicherte, zu der Anfrage passende Unterrichtsinhaltinformationen zu wenigstens einer Unterrichtseinheit; und Auswählen, auf Grundlage der Auswertung, der entsprechenden in der wenigstens einen Datenspeichereinrichtung gespeicherten Unterrichtsinhaltinformationen zu der wenigstens einen Unterrichtseinheit, und Kommunizieren der ausgewählten Unterrichtsinhaltinformationen zu der wenigstens einen Unterrichtseinheit über die Kommunikationseinheit bzw. -schnittstelle der wenigstens einen Datenspeichereinrichtung an die Kommunikationseinheit bzw. -schnittstelle des wenigstens einen Endgeräts.

Das Verfahren gemäß dem zweiten Aspekt der Erfindung lässt sich insbesondere mit dem System gemäß dem ersten Aspekt der Erfindung implementieren, sodass sämtliche Ausführungen im Zusammenhang mit dem System gemäß dem ersten Aspekt der Erfindung analog für das Verfahren gemäß dem zweiten Aspekt der Erfindung gelten und umgekehrt.

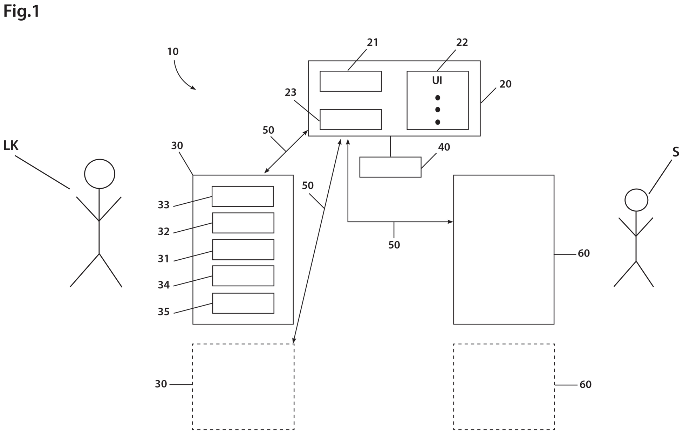

Einzelne Aspekte bzw. Merkmale der Erfindung sind nachfolgend anhand von Ausführungsbeispielen nochmals beispielhaft erläutert. Dabei zeigt Fig. 1 eine Prinzipdarstellung eines Kommunikationssystems gemäß einem Ausführungsbeispiel.

Fig. 1 zeigt eine Prinzipdarstellung eines Kommunikationssystems 10 gemäß einem Ausführungsbeispiel.

Das im Weiteren auch als "System" bezeichnete Kommunikationssystem 10 ist zur wenigstens teilautomatisierten, gegebenenfalls vollautomatisierten, Erzeugung von Unterrichtsinhalten sowie gegebenenfalls auch zur wenigstens teilautomatisierten, gegebenenfalls vollautomatisierten, Planung und/oder Durchführung von Unterrichtsinhalten für Schüler bzw. Schülerinnen (nachfolgend wird allein der Begriff "Schüler" verwendet) eingerichtet. Bei dem System 10 System 10 handelt es sich sonach im Allgemeinen um ein computertechnisch implementiertes System, welches eingerichtet ist, eine Lehrkraft bei der wenigstens teilautomatisierten, gegebenenfalls vollautomatisierten, Erzeugung von Unterrichtsinhalten sowie gegebenenfalls auch bei der wenigstens teilautomatisierten, gegebenenfalls vollautomatisierten, Planung und/oder Durchführung von Unterrichtsinhalten für Schüler zu unterstützen. Das System 10 ist sonach im Allgemeinen computertechnisch eingerichtet, computertechnisch implementiert unterstützende Dienstleistungen für eine oder mehrere Lehrkräfte bei der Erzeugung von Unterrichtsinhalten sowie gegebenenfalls auch bei der Planung und/oder Durchführung von Unterrichtsinhalten für Schüler bereitzustellen.

Das System 10 umfasst zumindest die folgenden Bestandteile, welche eingerichtet sind, miteinander computertechnisch zusammenzuwirken: eine hardware- und/oder softwaremäßig implementierte Datenspeichereinrichtung 20, wenigstens ein hardware- und/oder softwaremäßig implementiertes Endgerät 30 und wenigstens eine hardware- und/oder softwaremäßig implementierte Steuereinrichtung 40. Die vorgenannten Bestandteile des Systems 10 können eingerichtet sein, über wenigstens eine, z. B. drahtgebundene oder drahtlose, Daten- bzw. Kommunikationsverbindung 50 bzw. über wenigstens ein, z. B. drahtgebundenes oder drahtloses, Kommunikationsnetzwerk direkt oder indirekt, d. h. unter Zwischenschaltung wenigstens einer Kommunikationsschnittstelle, wie z. B. einer Programm- bzw. Softwareanwendung (App), Webseite, Web-Portal, etc., und/oder unter Zwischenschaltung wenigstens einer Programmierschnittstelle, wie z. B. einer API, etc., miteinander zu kommunizieren, wobei ein oder mehrere Kommunikationsprotokolle bzw. -standards, insbesondere Internetprotokolle bzw. -standards, wie z. B. TCP/IP-Protokolle bzw. -standards, verwendet werden können.

Die Datenspeichereinrichtung 20 des Systems 10 kann als Server, insbesondere als ein Cloud-Server, einer Client-Server-Struktur erachtet werden. Das wenigstens eine Endgerät 30 des Systems 10 kann als Client einer entsprechenden Client-Server-Struktur erachtet werden. Das System 10 kann sonach insgesamt als Client-Server-Struktur ausgeführt bzw. implementiert sein.

Die Datenspeichereinrichtung 20 kann z. B. durch einen hardware- und/oder softwaremäßig implementierten Server gebildet sein, einen Bestandteil eines solchen Servers bilden oder einen solchen Server umfassen. Angesprochen sind insbesondere Cloud- bzw. Netzwerk-Server mit einer geeigneten Kommunikationsstruktur zur Integration des Servers in ein Daten- bzw. Kommunikationsnetzwerk, wie z. B. das Internet, über welche sich eine Daten- bzw. Kommunikationsverbindung mit wenigstens einem nutzerseitigen Endgerät 30 ausbilden bzw. aufrechterhalten lässt. Die Datenspeichereinrichtung 20 umfasst alle zu ihrem Betrieb notwendigen hardware- und/oder softwaremäßig implementierten Bestandteile; hierzu können je nach konkreter Konfiguration z. B. eine computertechnisch implementierte Prozessoreinheit 21 und/oder eine computertechnisch implementierte Datenspeichereinheit 22 zählen.

Um computertechnisch mit den anderen Bestandteilen des Systems 10 kommunizieren bzw. mit diesen verbunden werden zu können, weist die Datenspeichereinrichtung 20 wenigstens eine, z. B. in Form eines Gateways ausgebildete oder ein solches umfassende, Kommunikationseinheit 23 oder -schnittstelle auf. Die wenigstens eine Kommunikationseinheit 23 oder -schnittstelle kann insbesondere eingerichtet sein, über die Daten- bzw. Kommunikationsverbindung 50 bzw. wenigstens ein Kommunikationsnetzwerk, wie z. B. ein Telekommunikationsnetzwerk oder ein Datennetzwerk, wie z. B. das Internet, mit dem wenigstens einen Endgerät 30 eines Nutzers und/oder der Steuereinrichtung 40 zu kommunizieren.

In der Datenspeichereinrichtung 20 sind ein oder mehrere Unterrichtsinhaltinformationen UI zu wenigstens einer Unterrichtseinheit abrufbar gespeichert. Bei entsprechenden Unterrichtsinhaltinformationen UI kann es sich z. B. um in einer Unterrichtseinheit verwendbare elektronische bzw. computertechnisch verarbeitbare Inhalte, insbesondere Dokumente, wie z. B. Arbeitsdokumente- Arbeitsblätter, Aufgaben- und Testdokumente, Kontrolldokumente, Präsentationen, interaktive Inhalte, Quiz, Rätsel, lernfördernde Spiele, etc., handeln. Entsprechende Unterrichtsinhaltinformationen Ul können beispielsweise und damit nicht abschließend in wenigstens einem der folgenden Formate, hierbei kann es sich insbesondere um entsprechende Datei- bzw. Datenformate handeln, vorliegen: einem Textformat, einem Bildformat, einem Graphikformat, einem Tabellenformat, einem Formelformat, einem Präsentationsformat, einem Vektorformat, einem Webseitenformat, einem Audioformat, einem Videoformat, einem Weblinkformat, etc. Entsprechende Unterrichtsinhaltinformationen UI können nach bestimmten Kategorien kategorisiert in der Datenspeichereinrichtung 20 gespeichert sein. Entsprechende Kategorien können beispielsweise und damit nicht abschließend sein: Inhaltskategorien, welche die Unterrichtsinhaltinformationen UI nach ihren Inhalten kategorisieren, Alterskategorien, welche die Unterrichtsinhaltinformationen UI nach ihrem Alter kategorisieren, Zielgruppenkategorien, welche die Unterrichtsinhaltinformationen UI nach ihrer Zielgruppe kategorisieren, Sprachkategorien, welche die Unterrichtsinhaltinformationen UI nach ihrer Sprache kategorisieren, Formatkategorien, welche die Unterrichtsinhaltinformationen UI nach ihrem Format, z. B. Text, Bild, Graphik, Tabelle, Formel, Präsentation, Vektor, Webseite, Audio, Video, Weblink, Multimedia, etc. kategorisieren, Schwierigkeitskategorien, welche die Unterrichtsinhaltinformationen Ul nach ihrem Schwierigkeitsgrad kategorisieren, etc.

Das wenigstens eine Endgerät 30 kann grundsätzlich jedwedes computertechnisch implementierte Endgerät sein. Das wenigstens eine Endgerät 30 kann daher je nach konkreter Konfiguration z. B. eine computertechnisch implementierte Prozessoreinheit 31 und/oder eine computertechnisch implementierte Datenspeichereinheit 32 und/oder eine computertechnisch implementierte Kommunikationsschnittstelle 33, insbesondere eine Kommunikationsschnittstelle für eine Drahtlos- bzw. Funkkommunikation über einen Drahtlos- bzw. Funkkommunikationsstandard, wie z. B. einen WPAN- bzw. IEEE-Standard oder einen WLAN-Standard, aufweisen. Konkret kann es sich bei dem wenigstens einen Endgerät 30 z. B. um einen Computer, ein Tablet, einen Laptop, ein Smartphone, eine Smartwatch, ein Smartglass, eine Virtual-Reality ("VR") Brille oder ein sonstiges Virtual Reality-Gerät, etc., handeln. Angesprochen sind grundsätzlich sowohl portable als auch nicht-portable Endgeräte. Das wenigstens eine Endgerät 30 ist typischerweise einer Lehrkraft LK zugeordnet, welche das System 10 zumindest zur Erzeugung von Unterrichtsinhalten, d. h. im Allgemeinen insbesondere zur Erzeugung von Lerninhalten, die einem Schüler durch die Lehrkraft LK zu vermitteln sind, und/oder Prüfinhalte, die von einem Schüler durch die Lehrkraft LK abzuprüfen sind, nutzen möchte und hierfür über das wenigstens eine Endgerät 30 bzw. ein(e) auf diesem installierte Software bzw. Programm (App) direkt oder indirekt Zugriff auf die in der Datenspeichereinrichtung 20 gespeicherten Unterrichtsinhaltinformationen Ul erlangen möchte.

Um computertechnisch mit den anderen Bestandteilen des Systems 10 kommunizieren bzw. mit diesen verbunden werden zu können, umfasst das wenigstens eine Endgerät 30, wie erwähnt, wenigstens eine, z. B. in Form eines Gateways ausgebildete oder ein solches umfassende, Kommunikationseinheit 33 oder -schnittstelle. Die wenigstens eine Kommunikationseinheit 33 oder -schnittstelle kann insbesondere eingerichtet sein, über die Daten- bzw. Kommunikationsverbindung 50 bzw. ein Kommunikationsnetzwerk, wie z. B. ein Telekommunikationsnetzwerk oder ein Datennetzwerk, wie z. B. das Internet, mit der Datenspeichereinrichtung 20 und/oder der Steuereinrichtung 40 zu kommunizieren. Wie angedeutet, kann die Kommunikationseinheit 33 oder -schnittstelle z. B. eingerichtet sein, eine Drahtlos- bzw. Funkkommunikation über einen Drahtlos- bzw. Funkkommunikationsstandard, wie z. B. einen WPAN- bzw. IEEE-Standard oder einen WLAN-Standard, mit der Datenspeichereinrichtung 20 und/oder der Steuereinrichtung 40 zu kommunizieren.

Das wenigstens eine Endgerät 30 ist insbesondere eingerichtet, auf Grundlage von typischerweise über eine hardware- und/oder softwaremäßig implementierte Nutzerschnittstelle 34, diese kann gegebenenfalls als eine Software bzw. als ein Programm (App) oder ein als Bestandteil eines/einer solchen auf dem wenigstens einen Endgerät 30 installiert sein, getätigten Nutzereingaben Anfragen an die Datenspeichereinrichtung 20, betreffend ein oder mehrere von einem Nutzer, insbesondere einer Lehrkraft, geplante Unterrichtsinhaltinformationen zu wenigstens einer geplanten Unterrichtseinheit, zu erzeugen und zu übertragen. Deshalb weist das wenigstens eine Endgerät 30 die wenigstens eine Kommunikationseinheit 33 bzw. -schnittstelle auf, über welche das wenigstens Endgerät 30 mit der Datenspeichereinrichtung 20 kommunizieren kann. Entsprechende Anfragen können daher über die wenigstens eine endgerätseitige Kommunikationseinheit 33 bzw. -schnittstelle, über welche das wenigstens eine Endgerät 30 mit der Datenspeichereinrichtung 20 kommunizieren kann, an die Datenspeichereinrichtung 20 übertragen werden.

Die Steuereinrichtung 40 ist eingerichtet, eine über die Kommunikationseinheit 33 bzw. -schnittstelle des Endgeräts 30 an die Datenspeichereinrichtung 20 zu kommunizierende oder kommunizierte Anfrage im Hinblick auf in der Datenspeichereinrichtung 20 gespeicherte, zu der Anfrage passende Unterrichtsinhaltinformationen UI zu wenigstens einer Unterrichtseinheit zu analysieren bzw. auszuwerten, auf Grundlage der Analyse bzw. Auswertung die entsprechenden bzw. korrespondierenden in der Datenspeichereinrichtung 20 gespeicherten Unterrichtsinhaltinformationen UI zu der wenigstens einen Unterrichtseinheit auszuwählen, und die ausgewählten Unterrichtsinhaltinformationen UI zu der wenigstens einen Unterrichtseinheit über die Kommunikationsschnittstelle 23 der Datenspeichereinrichtung 20 an die Kommunikationsschnittstelle 33 des wenigstens einen Endgeräts 30 zu kommunizieren. Die Kommunikation der vermittels der Steuereinrichtung 40 ausgewählten Unterrichtsinhaltinformationen UI zu der wenigstens einen Unterrichtseinheit kann in einem Format erfolgen, in welchem die ausgewählten Unterrichtsinhaltinformationen UI zu der wenigstens einen Unterrichtseinheit auf dem wenigstens einen Endgerät 30 computertechnisch verarbeitbar, d. h. insbesondere darstellbar und/oder über eine Eingabe- und/oder Ausgabeeinheit bzw. -schnittstelle des wenigstens einen Endgeräts 30 bearbeitbar sind, was nicht nur eine bloße Ausgabe, insbesondere Darstellung, der ausgewählten Unterrichtsinhaltinformationen UI zu der wenigstens einen Unterrichtseinheit, sondern gegebenenfalls auch eine nutzerseitige Bearbeitung, etwa in Form einer Individualisierung, der ausgewählten Unterrichtsinhaltinformationen Ul zu der wenigstens einen Unterrichtseinheit beinhalten kann.

Eine wesentliche Aufgabe und Funktion der Steuereinrichtung 40 besteht sonach darin, eine über die Kommunikationsschnittstelle 33 des wenigstens einen Endgeräts 30 an die Datenspeichereinrichtung 20 zu kommunizierende oder kommunizierte Anfrage im Hinblick auf in der Datenspeichereinrichtung 20 gespeicherte, zu der Anfrage passende Unterrichtsinhaltinformationen UI zu wenigstens einer Unterrichtseinheit auszuwerten und auf Grundlage der Auswertung die entsprechenden in der Datenspeichereinrichtung 20 gespeicherten Unterrichtsinhaltinformationen UI zu der wenigstens einen Unterrichtseinheit auszuwählen, um die entsprechend ausgewählten Unterrichtsinhaltinformationen UI zu wenigstens einer Unterrichtseinheit sodann an das wenigstens eine Endgerät 30, insbesondere das wenigstens eine Endgerät 30, über welches die der Auswahl zugrunde liegende Anfrage erfolgte, zu kommunizieren.

Die Steuereinrichtung 40 kann daher wenigstens der Datenspeichereinrichtung 20 zugeordnet sein, um eine über die Kommunikationseinheit 33 bzw. -schnittstelle des wenigstens einen Endgeräts 30 an die Datenspeichereinrichtung 20 zu kommunizierende oder kommunizierte Anfrage im Hinblick auf in der Datenspeichereinrichtung 20 gespeicherte, zu der Anfrage passende Unterrichtsinhaltinformationen UI zu wenigstens einer Unterrichtseinheit auszuwerten, auf Grundlage der Auswertung die entsprechenden in der Datenspeichereinrichtung 20 gespeicherten Unterrichtsinhaltinformationen UI zu der wenigstens einen Unterrichtseinheit auszuwählen, und die ausgewählten Unterrichtsinhaltinformationen UI zu der wenigstens einen Unterrichtseinheit über die Kommunikationseinheit 23 bzw. -schnittstelle der Datenspeichereinrichtung 20 an die Kommunikationseinheit 33 bzw. -schnittstelle des wenigstens einen Endgeräts 30 zu kommunizieren.

Die Steuereinrichtung 40 kann daher insbesondere programmtechnisch entsprechend konfiguriert sein; die Steuereinrichtung 40 kann sonach z. B. einen oder mehrere Algorithmen oder sonstige programmtechnische Mittel aufweisen, welche eingerichtet sind, eine über die Kommunikationseinheit 33 bzw. -schnittstelle des wenigstens einen Endgeräts 30 an die Datenspeichereinrichtung 20 zu kommunizierende oder kommunizierte Anfrage im Hinblick auf in der Datenspeichereinrichtung 20 gespeicherte, zu der Anfrage passende Unterrichtsinhaltinformationen UI zu wenigstens einer Unterrichtseinheit auszuwerten und eingerichtet sind, auf Grundlage der Auswertung die entsprechenden in der Datenspeichereinrichtung 20 gespeicherten Unterrichtsinhaltinformationen Ul zu der wenigstens einen Unterrichtseinheit auszuwählen. Eine entsprechende Auswahl kann einem anfragenden Nutzer, z. B. als Vorschlag, an das jeweilige nutzerseitige Endgerät 30 kommuniziert werden.

Bei entsprechenden Algorithmen oder sonstigen programmtechnischen Mitteln kann es sich sonach um Analyse- oder Auswertealgorithmen und/oder Auswahlalgorithmen handeln, welche eingerichtet sind, eine über die Kommunikationseinheit 33 bzw. -schnittstelle des wenigstens einen Endgeräts 30 an die Datenspeichereinrichtung 20 zu kommunizierende oder kommunizierte Anfrage im Hinblick auf in der Datenspeichereinrichtung 20 gespeicherte, zu der Anfrage inhaltlich passende Unterrichtsinhaltinformationen Ul zu wenigstens einer Unterrichtseinheit auszuwerten, und welche eingerichtet sind, auf Grundlage der Auswertung, die entsprechenden in der Datenspeichereinrichtung 20 gespeicherten Unterrichtsinhaltinformationen UI zu der wenigstens einen Unterrichtseinheit auszuwählen.

Entsprechende Algorithmen können dabei Prinzipien der künstlichen Intelligenz bzw. des maschinellen Lernens sowie mathematische Modelle, insbesondere Sprachmodelle, anwenden bzw. auf Grundlage von Prinzipien der künstlichen Intelligenz bzw. des maschinellen Lernens bzw. mathematischen Modellen, insbesondere Sprachmodellen, trainiert worden sein. Ein entsprechendes Training kann z. B. auf Grundlage von Referenz-Anfragen an eine Referenz-Datenspeichereinrichtung und/oder auf Grundlage von Referenz-Analysen bzw. Referenz-Auswertungen einer Referenz-Datenspeichereinrichtung und/oder auf Grundlage von Referenz-Auswahlen einer Referenz-Datenspeichereinrichtung erfolgen. Gleichermaßen kann ein entsprechendes Training auf Grundlage von Prinzipien des Data-Mining, d. h. der Anwendung statistischer Methoden auf große Datenbestände mit der Zielsetzung, neue Datenverbindungen, wie z. B. Querverbindungen, und Trends zu erkennen, erfolgen. Grundsätzlich sind jedwede Trainingsansätze des maschinellen Lernens denkbar.

Konkret kann ein entsprechendes Training als Eingangsinformationen z. B. wenigstens eine der folgenden Informationen verwenden: Informationen aus bestehenden Unterrichtsinhalten, wie z. B. Schulbüchern, Arbeits- und/oder Übungsheften, sowie sonstigen Bildungsmedien, wie z. B. Enzyklopädien, Sachbüchern, Fachbüchern, wissenschaftlichen Artikeln, Bildungs- oder Wissensplattformen, wie z. B. im Internet verfügbaren Bildungs- oder Wissensplattformen, Unterhaltungsplattformen, wie z. B. im Internet verfügbaren Audio- und/oder Videoplattformen, sozialen Medien, etc.

Die Auswertung und/oder Auswahl kann, insbesondere wenn das System über eigene Sprachmodelle verfügt oder auf externe Sprachmodelle, d. h. z. B. im Internet verfügbare Sprachmodelle, zurückgreift, auf Grundlage von Anfragen bzw. Prompts erfolgen. Entsprechende Sprachmodelle können auf Grundlage entsprechender Anfragen bzw. Prompts, wie im Weiteren erläutert wird, auch eingerichtet sein, neue Informationen zu erzeugen.

Die beschriebene Konfiguration des Systems 10 ermöglicht es, wenigstens eine Lehrkraft LK bei der Erzeugung, Planung und Durchführung von Unterrichtsinhalten computertechnisch implementiert zu unterstützen.

Das System 10 ermöglicht nicht nur die Erzeugung, Planung und Durchführung von Unterrichtsinhalten grundsätzlich einfacher und/oder individueller zu gestalten, sondern auch, technische Mittel, wie z. B. Prinzipien der künstlichen Intelligenz, des maschinellen Lernens, mathematischer Modelle, insbesondere Sprachmodelle, etc. in die die Erzeugung, Planung und Durchführung von Unterrichtsinhalten einzubinden, um - im Vergleich zu einer konventionellen Erzeugung, Planung und Durchführung von Unterrichtsinhalten - die gegebenen computertechnischen Ressourcen effizient bzw. optimal zu nutzen.

Die Steuereinrichtung 40 kann eingerichtet sein, eine auf dem wenigstens Endgerät 30, d. h. insbesondere einer Wiedergabeeinheit 35 bzw. -schnittstelle wiedergebbare Nutzeroberfläche zu erzeugen, über welche ein Nutzer Eingaben, betreffend ein oder mehrere von dem Nutzer geplante Unterrichtsinhaltinformationen UI zu wenigstens einer geplanten Unterrichtseinheit, zu tätigen. Die Nutzeroberfläche kann insbesondere durch die bzw. eine auf dem wenigstens einen Endgerät 30 installierte Software, z. B. in Form einer App, erzeugt werden. Eine entsprechende Software kann dem Nutzer auf einfache Weise computerimplementiert wenigstens bei der Erzeugung und/oder Planung und/oder Durchführung und/oder Auswertung von Unterrichtsinhalten unterstützen.

Die Software kann wenigstens eine der folgenden Softwarefunktionen aufweisen: ein oder mehrere Personalisierungen, etwa in Form von Begrüßungen eines Nutzers, insbesondere chatbotartig implementierten, Dialogen mit einem Nutzer, ein oder mehrere Nutzerkonten, ein oder mehrere gespeicherte historische Eingaben bzw. Anfragen wenigstens eines Nutzers an die Datenspeichereinrichtung 20, einen oder mehrere Entwürfe von Eingaben bzw. Anfragen wenigstens eines Nutzers an die Datenspeichereinrichtung 20, eine einen Kalender bzw. Terminplaner abbildende Nutzeroberfläche, insbesondere in Form eines Unterrichtsplaners des wenigstens einen Nutzers, bei welchem es sich, wie erwähnt, typischerweise um eine Lehrkraft handelt, einen Arbeitsstatus wenigstens eines Nutzers zu wenigstens einem von dem wenigstens einen Nutzer zu bearbeitenden Unterrichtsinhalt, einen Vorschlag an wenigstens einen Nutzer zur Gestaltung wenigstens eines Unterrichtsinhalts, d. h. insbesondere eines entsprechenden Lern- und/oder Prüfinhalts, einen Auswertungs- bzw. Bewertungsstatus eines, z. B. im Rahmen einer Prüfung erarbeiteten, Arbeitsergebnisses eines Schülers oder einer Gruppe von Schülern, einen Vergleichsstatus eines, z. B. im Rahmen einer Prüfung erarbeiteten, Arbeitsergebnisses eines ersten Schülers oder einer ersten Gruppe von Schülern mit entsprechenden Arbeitsergebnissen eines zweiten Schülers oder einer zweiten Gruppe von Schülern (was z. B. klassenübergreifend, schulübergreifend, länderübergreifend, etc. erfolgen kann), einen Vergleichsstatus eines, z. B. im Rahmen einer Prüfung erarbeiteten, Arbeitsergebnisses eines Schülers oder einer Gruppe von Schülern zu einem ersten Zeitpunkt, etwa am Anfang eines Schuljahres, mit entsprechenden Arbeitsergebnissen des Schülers oder der Gruppe von Schülern zu einem zweiten Zeitpunkt, etwa in der Mitte oder zum Ende des Schuljahres, (was z. B. wiederum klassenübergreifend, schulübergreifend, länderübergreifend, etc. erfolgen kann), etc.

Die Steuereinrichtung 40 kann zudem eingerichtet sein, eine auf dem wenigstens einen Endgerät 30 wiedergebbare Nutzeroberfläche zu erzeugen, über welche ein Nutzer Unterstützung bei Eingaben, betreffend eine oder mehrere von einem Nutzer geplante Unterrichtsinhaltinformationen zu wenigstens einer geplanten Unterrichtseinheit, erhalten kann. Die Nutzeroberfläche kann insbesondere durch die auf dem wenigstens einen Endgerät 30 installierte Software, z. B. in Form einer App, erzeugt werden. Die Software kann einem Nutzer auf einfache Weise computerimplementiert wenigstens bei der Erzeugung und/oder Planung und/oder Durchführung und/oder Auswertung von Unterrichtsinhalten unterstützen.

Die Software kann daher wenigstens eine der folgenden Softwarefunktionen aufweisen: z. B. chatbotartig implementierte Dialoge mit einem Nutzer, mit welchem ein Nutzer mit der Software in einen Dialog über geplante Unterrichtsinhaltinformationen Ul zu wenigstens einer geplanten Unterrichtseinheit tritt und von der Software, etwa implementiert durch wenigstens ein zugrundeliegendes Sprachmodell, Anregungen, Auskünfte, Hinweise, Vorschläge, etc., zu geplanten Unterrichtsinhalten zu wenigstens einer geplanten Unterrichtseinheit erhält. Die Software kann dem Nutzer z. B. vorschlagen, den Unterrichtsinhalt des Erlernens von bestimmten mathematischen Inhalten einem oder mehreren Schülern z. B. durch bestimmte Beispiele aus Natur und/oder Technik zu vermitteln und dem Nutzer entsprechende Beispiele aus Natur und/oder Technik gleichermaßen vorschlagen. Analoges gilt für andere Unterrichtsinhalte, etwa im Rahmen des Erlernens einer Sprache, naturwissenschaftlicher Inhalte, technischer Inhalte, geschichtlicher Inhalte, sozialwissenschaftlicher Inhalte, rechtlicher Inhalte, wirtschaftlicher Inhalte, medizinischer Inhalte, etc.

Die Nutzeroberfläche kann wenigstens eine der folgenden, insbesondere über Drop-Down-Menüs, auswählbare Kategorien enthalten: Art und/oder Inhalt der Unterrichtsinhaltinformationen Ul, Art und/oder Inhalt der Unterrichtseinheit, Dauer der Unterrichtseinheit, Ort der Unterrichtseinheit, Zielgruppe der Unterrichtsinhaltinformationen Ul, Zielgruppe der Unterrichtseinheit. Die Art und/oder Inhalt der Unterrichtsinhaltinformationen UI kann z. B. das Format der Unterrichtsinhaltinformationen Ul, die Sprache der Unterrichtsinhaltinformationen Ul, die Integration von aktiven und/oder passiven Elementen zu den Unterrichtsinhaltinformationen UI, etc. beinhalten; Entsprechendes gilt für Art und/oder Inhalt der Unterrichtseinheiten.

Die Steuereinrichtung 40 kann zudem eingerichtet sein, ein oder mehrere in der Datenspeichereinrichtung 20 gespeicherte Unterrichtsinhaltinformationen Ul zu wenigstens einer Unterrichtseinheit auf Grundlage von Anfragen bzw. Nutzereingaben anzupassen. Die Anfragen bzw. Nutzereingaben können über wenigstens eine Lehrkraft, insbesondere eine Lehrkraft, welche die in der Datenspeichereinrichtung 20 gespeicherten Unterrichtsinhaltinformationen Ul zu wenigstens einer Unterrichtseinheit z. B. zur Planung, Durchführung und/oder Auswertung wenigstens einer Unterrichtseinheit nutzt, und/oder über wenigstens einen Schüler, insbesondere einen Schüler, welcher an wenigstens einer Unterrichtseinheit, in welcher entsprechende Unterrichtsinhaltinformationen Ul vermittelt werden sollen, teilnehmen soll oder teilnahm, und/oder von einem Dritten, insbesondere einer anderen Lehrkraft, welche die in der Datenspeichereinrichtung 20 gespeicherten Unterrichtsinhaltinformationen UI zu wenigstens einer Unterrichtseinheit, z. B. zur Planung, Durchführung und/oder Auswertung wenigstens einer Unterrichtseinheit nutzt oder nutzte, erfolgen. Mithin ermöglicht es das System 10, wenigstens einen Teil der in der Datenspeichereinrichtung 20 gespeicherten Unterrichtsinhaltinformationen UI zu wenigstens einer Unterrichtseinheit auf Grundlage von Anfragen bzw. Nutzereingaben anzupassen, etwa um diese im Hinblick auf eine verbesserte Vermittlung eines besonderen Unterrichtsinhalts zu ändern bzw. optimieren, sich als für die Vermittlung eines besonderen Unterrichtsinhalts als geeignet erwiesene Unterrichtsinhaltsinformationen UI, z. B. durch entsprechende Markierung, Kommentierung, etc., positiv kenntlich zu machen, sich als für die Vermittlung eines besonderen Unterrichtsinhalts als ungeeignet erwiesene Unterrichtsinhaltsinformationen UI, z. B. durch entsprechende Markierung, Kommentierung, etc., negativ kenntlich zu machen oder gegebenenfalls zu löschen. Einzelne, mehrere oder alle Änderungsvorgänge von Unterrichtsinhaltsinformationen UI können eine Autorisierung eines jeweiligen Nutzers erfordern, was z. B. durch ein Einloggen eines Nutzers mit einem Passwort und/oder ein Einloggen eines Nutzers über eine, z. B. durch entsprechende Verschlüsselung, sichere Datenverbindung, realisiert werden kann. Einzelne, mehrere oder alle Änderungsvorgänge von Unterrichtsinhaltsinformationen Ul können zudem eine inhaltliche Autorisierung, etwa im Hinblick auf pädagogische Integrität, Plausibilität, erwarteten bzw. prognostizierten Lernerfolg wenigstens eines Schülers, etc. erfordern, was ebenfalls über einen oder mehrere Algorithmen der Steuereinrichtung 40 möglich sein kann.

Die Steuereinrichtung 40 kann zudem eingerichtet sein, eine oder mehrere in der wenigstens einen Datenspeichereinrichtung 20 gespeicherte Unterrichtsinhaltinformationen UI zu wenigstens einer Unterrichtseinheit auf Grundlage von computerimplementierten Operationen automatisiert anzupassen. Die computerimplementierten Operationen können vermittels bzw. auf Grundlage von Algorithmen der Steuereinrichtung 40 erfolgen, welche eingerichtet sind, die in der Datenspeichereinrichtung 20 gespeicherten Unterrichtsinhaltinformationen Ul zu wenigstens einer Unterrichtseinheit im Hinblick auf wenigstens ein Zielkriterium zu bewerten. Auf Basis der Bewertung können die computerimplementierten Operationen dahin genutzt werden, um Unterrichtsinhalte anzupassen. Auch insoweit können Algorithmen der künstlichen Intelligenz, d. h. insbesondere des maschinellen Lerners, bzw. mathematische Modelle, insbesondere Sprachmodelle, Anwendung finden, welche eingerichtet sind, die in der Datenspeichereinrichtung 20 gespeicherten Unterrichtsinhaltinformationen UI zu wenigstens einer Unterrichtseinheit im Hinblick auf wenigstens ein Zielkriterium zu bewerten, und welche im Weiteren eingerichtet sein können, auf Basis der Bewertung Unterrichtsinhaltsinformationen Ul anzupassen. Demnach kann durch entsprechende computerimplementierte Operationen der Steuereinrichtung 40, mithin im Allgemeinen computerimplementiert bzw. Algorithmus-basiert, eine, gegebenenfalls (quasi)kontinuierliche, Optimierung - dies kann in einfachen Fällen auch eine bloße Aktualisierung bzw. Ergänzung von Unterrichtsinhaltsinformationen UI etwa im Hinblick auf einen geänderten Lehrplan beinhalten - der in der Datenspeichereinrichtung 20 gespeicherten Unterrichtsinhaltinformationen Ul erfolgen, um wenigstens ein Zielkriterium zu erreichen. Ein Nutzer des Systems 10 kann sonach auf Grundlage entsprechender Anfragen stets in der Datenspeichereinrichtung 20 gespeicherte Unterrichtsinhaltinformationen Ul erhalten, mit welchem der Nutzer eine, gegebenenfalls auf einen oder mehrere Schüler individualisiert optimierte, Unterrichtsgestaltung vornehmen kann, um das wenigstens eine Zielkriterium zu erreichen oder sich in zumindest in Richtung des Zielkriteriums zu bewegen.

Bei einem entsprechenden Zielkriterium z. B. um einen angestrebten und/oder erreichten Lernerfolg, gegebenenfalls im Hinblick auf wenigstens einen bestimmten Schüler, handeln. Die Steuereinrichtung 40 kann sonach eingerichtet sein, auf Grundlage entsprechender Anfragen durch einen Nutzer Unterrichtsinhaltsinformationen Ul auszuwählen, welche es dem Nutzer ermöglichen, dass ein oder mehrere bestimmte Schüler einen angestrebten Lernerfolg, z. B. durch entsprechende Übungen, Wiederholungen, etc., erreichen und/oder einen erreichten Lernerfolg, z. B. durch entsprechende Übungen, Wiederholungen, etc., nicht wieder verlieren. Mit anderen Worten können Unterrichtsinhaltsinformationen UI vermittels der Steuereinrichtung 40 individuell für einen oder mehrere bestimmte Schüler ausgewählt werden, was es dem Nutzer ermöglichen kann, einem oder mehreren bestimmten Schülern die entsprechenden Unterrichtsinhalte so zu vermitteln, dass ein angestrebter Lernerfolg, z. B. durch entsprechende Übungen, Wiederholungen, etc., erreicht und/oder ein erreichter Lernerfolg, z. B. durch entsprechende Übungen, Wiederholungen, etc., nicht wieder verloren werden kann.

Die Steuereinrichtung 40 kann zudem eingerichtet sein, eine oder mehrere neue Unterrichtsinhaltinformationen UI zu wenigstens einer Unterrichtseinheit auf Grundlage von Nutzereingaben zu erzeugen und in der Datenspeichereinrichtung 20 zu speichern, wobei die Nutzereingaben über wenigstens eine Lehrkraft, insbesondere eine Lehrkraft, welche die in der Datenspeichereinrichtung 20 gespeicherten Unterrichtsinhaltinformationen UI zu wenigstens einer Unterrichtseinheit zur Planung, Durchführung und/oder Auswertung wenigstens einer Unterrichtseinheit nutzt, und/oder über wenigstens einen Schüler, insbesondere einen Schüler, welcher an wenigstens einer Unterrichtseinheit, in welcher entsprechende Unterrichtsinhaltinformationen vermittelt werden sollen, teilnehmen soll oder teilnahm, und/oder von einem Dritten, insbesondere einer anderen Lehrkraft, welche die in der Datenspeichereinrichtung 20 gespeicherten Unterrichtsinhaltinformationen Ul zu wenigstens einer Unterrichtseinheit zur Planung, Durchführung und/oder Auswertung wenigstens einer Unterrichtseinheit nutzt oder nutzte, erfolgen. Mithin ermöglicht es das System 10, wenigstens einen Teil der in der Datenspeichereinrichtung 20 gespeicherten Unterrichtsinhaltinformationen UI zu wenigstens einer Unterrichtseinheit auf Grundlage von Anfragen bzw. Nutzereingaben neu zu erzeugen, etwa um eine verbesserte Vermittlung eines besonderen Unterrichtsinhalts zu ermöglichen bzw. optimieren, Einzelne, mehrere oder alle Neuerzeugungsvorgänge von Unterrichtsinhaltsinformationen Ul können eine Autorisierung eines jeweiligen Nutzers erfordern, was z. B. durch ein Einloggen eines Nutzers mit einem Passwort und/oder ein Einloggen eines Nutzers über eine, z. B. durch entsprechende Verschlüsselung, sichere Datenverbindung, realisiert werden kann. Einzelne, mehrere oder alle Neuerzeugungsvorgänge von Unterrichtsinhaltsinformationen Ul können zudem eine inhaltliche Autorisierung, etwa im Hinblick auf pädagogische Integrität, Plausibilität, erwarteten bzw. prognostizierten Lernerfolg wenigstens eines Schülers, etc. erfordern, was ebenfalls über einen oder mehrere Algorithmen der Steuereinrichtung 40 möglich sein kann.

Die Steuereinrichtung 40 kann zudem eingerichtet sein, ein oder mehrere neue Unterrichtsinhaltinformationen UI zu wenigstens einer Unterrichtseinheit in der Datenspeichereinrichtung 20 auf Grundlage von computerimplementierten Operationen automatisiert zu erzeugen. Die computerimplementierten Operationen können auf Grundlage von Algorithmen erfolgen, welche eingerichtet sind, die in der Datenspeichereinrichtung 20 gespeicherten Unterrichtsinhaltinformationen Ul zu wenigstens einer Unterrichtseinheit im Hinblick auf wenigstens ein Zielkriterium zu bewerten. Auf Basis der Bewertung können die computerimplementierten Operationen dahin genutzt werden, um Unterrichtsinhaltsinformationen Ul neu zu erzeugen. Auch insoweit können Algorithmen der künstlichen Intelligenz, d. h. insbesondere des maschinellen Lerners, bzw. mathematische Modelle, insbesondere Sprachmodelle, Anwendung finden, welche eingerichtet sind, die in der Datenspeichereinrichtung 20 gespeicherten Unterrichtsinhaltinformationen Ul zu wenigstens einer Unterrichtseinheit im Hinblick auf wenigstens ein Zielkriterium zu bewerten und im Weiteren eingerichtet sein können, auf Basis der Bewertung Unterrichtsinhaltsinformationen UI neu zu erzeugen. Demnach kann durch entsprechende computerimplementierte Operationen der Steuereinrichtung 40, mithin im Allgemeinen computerimplementiert bzw. Algorithmus-basiert, eine, gegebenenfalls (quasi)kontinuierliche, Optimierung - dies kann in einfachen Fällen auch eine bloße Ergänzung von Unterrichtsinhaltsinformationen etwa im Hinblick auf einen geänderten Lehrplan beinhalten - der in der Datenspeichereinrichtung 20 gespeicherten Unterrichtsinhaltinformationen UI erfolgen, um wenigstens ein Zielkriterium zu erreichen. Ein Nutzer des Systems 10 kann sonach auf Grundlage entsprechender Anfragen stets in der Datenspeichereinrichtung 20 gespeicherte Unterrichtsinhaltinformationen Ul erhalten, mit welchem der Nutzer eine, gegebenenfalls auf einen oder mehrere Schüler individualisiert optimierte, Unterrichtsgestaltung vornehmen kann, um das wenigstens eine Zielkriterium zu erreichen oder sich in zumindest in Richtung des Zielkriteriums zu bewegen.

Bei dem wenigstens einen Zielkriterium kann es sich um einen angestrebten und/oder erreichten Lernerfolg, gegebenenfalls im Hinblick auf wenigstens einen Schüler, handeln. Die Steuereinrichtung 40 kann sonach eingerichtet sein, auf Grundlage entsprechender computerimplementierter Operationen der Steuereinrichtung 40 Unterrichtsinhaltsinformationen Ul neu zu erzeugen, welche es dem Nutzer ermöglichen, dass ein oder mehrere bestimmte Schüler einen angestrebten Lernerfolg, z. B. durch entsprechende Übungen, Wiederholungen, etc., erreichen und/oder einen erreichten Lernerfolg, z. B. durch entsprechende Übungen, Wiederholungen, etc., nicht wieder verlieren. Mit anderen Worten können Unterrichtsinhaltsinformationen vermittels der Steuereinrichtung 40 individuell für einen oder mehrere bestimmte Schüler neu erzeugt werden, was es dem Nutzer ermöglichen kann, einem oder mehreren bestimmten Schüler(n) die entsprechenden Unterrichtsinhalte so zu vermitteln, dass ein angestrebter Lernerfolg, z. B. durch entsprechende Übungen, Wiederholungen, etc., erreicht und/oder ein erreichter Lernerfolg, z. B. durch entsprechende Übungen, Wiederholungen, etc., nicht wieder verloren werden kann.

Das wenigstens eine Endgerät 30 kann eingerichtet sein, mit der Datenspeichereinrichtung 20 zu kommunizieren, um auf Grundlage von Nutzereingaben erzeugte Bewertungen, betreffend ein oder mehrere, in der Datenspeichereinrichtung 20 gespeicherte Unterrichtsinhaltinformationen UI zu wenigstens einer geplanten Unterrichtseinheit, vorzunehmen. Das System 10 ermöglicht es sonach nicht nur Unterrichtsinhaltinformationen UI zu wenigstens einer geplanten Unterrichtseinheit anzupassen bzw. neu zu erzeugen, sondern auch zu bewerten, was es einem Nutzer oder einem Algorithmus ermöglichen kann, nur solche Unterrichtsinhaltinformationen Ul zu wenigstens einer geplanten Unterrichtseinheit auszuwählen bzw. zu verwenden, welche, z. B. qualitativ und/oder quantitativ betrachtet, bestimmte Bewertungen, d. h. insbesondere positive Bewertungen, aufweisen. Derart kann z. B. sichergestellt werden, dass einem Nutzer solche Unterrichtsinhaltinformationen UI zu wenigstens einer geplanten Unterrichtseinheit ausgewählt und übermittelt werden, mit welchen z. B. eine Realisierung von bestimmten Lernerfolgen wahrscheinlich ist. Einzelne, mehrere oder alle Bewertungsvorgänge von Unterrichtsinhaltsinformationen UI können eine Autorisierung eines jeweiligen Nutzers erfordern, was z. B. durch ein Einloggen eines Nutzers mit einem Passwort und/oder ein Einloggen eines Nutzers über eine, z. B. durch entsprechende Verschlüsselung, sichere Datenverbindung, realisiert werden kann. Einzelne, mehrere oder alle Bewertungsvorgänge von Unterrichtsinhaltsinformationen können zudem eine inhaltliche Autorisierung, etwa im Hinblick auf pädagogische Integrität, Plausibilität, etc. erfordern, was ebenfalls über einen oder mehrere Algorithmen der Steuereinrichtung 40 möglich sein kann.

Die Bewertung von Unterrichtsinhaltinformationen UI zu wenigstens einer geplanten Unterrichtseinheit kann im Hinblick auf wenigstens ein Bewertungskriterium erfolgen. Bei einem Bewertungskriterium kann es sich z. B. um ein Kriterium handeln, welches die Wahrscheinlichkeit des Erreichens bzw. Aufrechterhaltens eines bestimmten gewünschten Lernerfolgs anzeigt. Konkret kann eine Bewertung einer Unterrichtsinhaltinformation UI zu wenigstens einer geplanten Unterrichtseinheit sonach anzeigen, dass mit dieser Unterrichtsinhaltinformation Ul eine hohe Wahrscheinlichkeit des Erreichens bzw. Aufrechterhaltens eines bestimmten gewünschten Lernerfolgs verknüpft ist. Derart können sich als für die Vermittlung eines besonderen Unterrichtsinhalts als geeignet erwiesene Unterrichtsinhaltsinformationen UI durch entsprechende Bewertung von als für die Vermittlung eines besonderen Unterrichtsinhalts als ungeeignet erwiesenen Unterrichtsinhaltsinformationen Ul unterschieden werden. Es ist sogar denkbar, dass Letztere unter bestimmten Bedingungen, d. h. z. B. bei einer bestimmten Anzahl an negativen Bewertungen, automatisiert gelöscht werden können, was ebenfalls über einen oder mehrere Algorithmen der Steuereinrichtung 40 möglich sein kann.

Die Steuereinrichtung 40 kann zudem eingerichtet sein, Arbeitsergebnisse von einem oder mehreren Schülern, insbesondere im Rahmen von mündlichen und/oder schriftlichen Prüfungen, im Hinblick auf wenigstens ein Auswertungskriterium, insbesondere ein die Qualität eines Lernerfolgs beschreibendes Qualitätskriterium, auszuwerten und eine die Auswertung bzw. Bewertung der Arbeitsergebnisse beschreibende Schülerbewertungsinformation zu erzeugen. Entsprechende Schülerbewertungsinformationen können ebenso in der Datenspeichereinrichtung 20 gespeichert werden. Die Steuereinrichtung 40 kann zudem eingerichtet sein, eine oder mehrere entsprechende Schülerbewertungsinformationen mit einer oder mehreren Unterrichtsinhaltsinformationen (und umgekehrt) zu verknüpfen, d. h. insbesondere zu korrelieren, um eine Korrelation zwischen bestimmten Unterrichtsinhaltsinformationen und der Auswertung von Arbeitsergebnissen von einem oder mehreren Schülern herzustellen. Eine entsprechende Auswertung und Korrelation kann wiederum über Algorithmen der Steuereinrichtung 40 erfolgen, welche z. B. eingerichtet sind, eine oder mehrere Schülerbewertungsinformationen mit einer oder mehreren Unterrichtsinhaltsinformationen (und umgekehrt) zu verknüpfen, d. h. insbesondere zu korrelieren, um eine Korrelation zwischen bestimmten Unterrichtsinhaltsinformationen und der Auswertung von Arbeitsergebnissen von einem oder mehreren Schülern herzustellen. Entsprechende Algorithmen können dabei Prinzipien der künstlichen Intelligenz bzw. des maschinellen Lernens sowie mathematische Modelle, insbesondere Sprachmodelle, anwenden bzw. auf Grundlage von Prinzipien der künstlichen Intelligenz bzw. des maschinellen Lernens bzw. mathematischen Modellen, insbesondere Sprachmodellen, trainiert worden sein.

Die Steuereinrichtung 40 kann zudem eingerichtet sein, wenigstens eine entsprechende Schülerbewertungsinformation bei der Auswahl von in der Datenspeichereinrichtung 20 gespeicherten Unterrichtsinhaltinformationen UI zu wenigstens einer Unterrichtseinheit zu berücksichtigen. Dies kann auf Grundlage der vorstehend beschriebenen Auswertung und/oder Korrelation zwischen bestimmten Unterrichtsinhaltsinformationen UI und der Auswertung von Arbeitsergebnissen von einem oder mehreren Schülern erfolgen, um sicherzustellen, dass nur solche Unterrichtsinhaltinformationen Ul zu wenigstens einer Unterrichtseinheit ausgewählt werden, welche sich, z. B. in der Vergangenheit, insbesondere in ähnlichen pädagogischen Aufgabestellungen, als erfolgreich erwiesen haben, um einem oder mehreren Schülern bestimmte Unterrichtsinhalte zu wenigstens einer Unterrichtseinheit zu vermitteln.

Die Steuereinrichtung 40 kann zudem eingerichtet sein, Beiträge von einem oder mehreren Schülern, insbesondere im Rahmen der Teilnahme an wenigstens einer Unterrichtseinheit, im Hinblick auf wenigstens ein Auswertungskriterium, insbesondere ein die Qualität eines Lernerfolgs beschreibendes Qualitätskriterium, auszuwerten und eine die Auswertung der Beiträge beschreibende Schülerauswertungsinformation zu erzeugen. Die Steuereinrichtung 40 kann sonach eingerichtet sein, insbesondere unmittelbare, Beiträge eines oder mehrerer Schüle, diese können z. B. über entsprechende Eingaben an schülerseitigen Endgeräten, wie z. B. einem Computer, einem Tablet, einem Laptop, einem Smartphone, einer Smartwatch, einem Smartglass, einer Virtual-Reality ("VR")-Brille oder sonstigem Virtual Reality-Gerät, etc., getätigt und über entsprechende Datenübertragung, gegebenenfalls in Echtzeit, gegebenenfalls anonymisiert oder personalisiert, an die Steuereinrichtung 40 übertragen werden, im Hinblick auf wenigstens ein Auswertungskriterium, insbesondere ein die Qualität eines Lernerfolgs beschreibendes Qualitätskriterium, auszuwerten und eine die Auswertung der Beiträge beschreibende Schülerauswertungsinformation zu erzeugen. Auch hierfür kann die Steuereinrichtung 40 Algorithmen umfassen, welche eingerichtet sind, Beiträge von einem oder mehreren Schülern, insbesondere im Rahmen der Teilnahme an wenigstens einer Unterrichtseinheit, im Hinblick auf wenigstens ein Auswertungskriterium, insbesondere ein die Qualität eines Lernerfolgs beschreibendes Qualitätskriterium, auszuwerten und eine die Auswertung der Arbeitsergebnisse beschreibende Schülerauswertungsinformation zu erzeugen. Entsprechende Algorithmen können dabei Prinzipien der künstlichen Intelligenz bzw. des maschinellen Lernens sowie mathematische Modelle, insbesondere Sprachmodelle, anwenden bzw. auf Grundlage von Prinzipien der künstlichen Intelligenz bzw. des maschinellen Lernens bzw. mathematischen Modellen, insbesondere Sprachmodellen, trainiert worden sein.

Die Steuereinrichtung 40 kann zudem eingerichtet sein, eine oder mehrere entsprechende Schülerauswertungsinformationen mit einer oder mehreren Unterrichtsinhaltsinformationen (und umgekehrt) zu verknüpfen, d. h. insbesondere zu korrelieren, um eine Korrelation zwischen bestimmten Unterrichtsinhaltsinformationen und der Auswertung von Beiträgen von einem oder mehreren Schülern herzustellen. Eine entsprechende Korrelation kann wiederum über Algorithmen erfolgen, welche eingerichtet sind, eine oder mehrere Schülerauswertungsinformationen mit einer oder mehreren Unterrichtsinhaltsinformationen (und umgekehrt) zu verknüpfen, d. h. insbesondere zu korrelieren, um eine Korrelation zwischen bestimmten Unterrichtsinhaltsinformationen und der Auswertung von Beiträgen von einem oder mehreren Schülern herzustellen. Entsprechende Algorithmen können dabei Prinzipien der künstlichen Intelligenz bzw. des maschinellen Lernens sowie mathematische Modelle, insbesondere Sprachmodelle, anwenden bzw. auf Grundlage von Prinzipien der künstlichen Intelligenz bzw. des maschinellen Lernens bzw. mathematischen Modellen, insbesondere Sprachmodellen, trainiert worden sein.

Die Steuereinrichtung 40 kann zudem eingerichtet sein, wenigstens eine entsprechende Schülerauswertungsinformation bei der Auswahl von in der Datenspeichereinrichtung 20 gespeicherten Unterrichtsinhaltinformationen UI zu wenigstens einer Unterrichtseinheit zu berücksichtigen. Dies kann auf Grundlage der vorstehend beschriebenen Auswertung und/oder Korrelation zwischen bestimmten Unterrichtsinhaltsinformationen UI und der Auswertung von Beiträgen von einem oder mehreren Schülern erfolgen, um sicherzustellen, dass nur solche Unterrichtsinhaltinformationen zu wenigstens einer Unterrichtseinheit ausgewählt werden, welche sich, z. B. in der Vergangenheit, insbesondere in ähnlichen pädagogischen Aufgabestellungen, als erfolgreich erwiesen haben, um einem oder mehreren Schülern bestimmte Unterrichtsinhalte zu wenigstens einer Unterrichtseinheit zu vermitteln.

Die Steuereinrichtung 40 kann zudem eingerichtet sein, auf Grundlage von einer oder mehreren Schülerauswertungsinformationen (alternativ oder ergänzend kann dies auf Grundlage von einer oder mehreren Schülerbewertungsinformationen erfolgen) für wenigstens einen Schüler eine individuelle Auswahl von Unterrichtsinhaltinformationen Ul zu wenigstens einer Unterrichtseinheit auszuwählen, insbesondere um den wenigstens einen Schüler gezielt in seinem Leistungsniveau zu verbessern. Die Steuereinrichtung 40 kann sonach eingerichtet sein, eine Lehrkraft bei der Planung von Unterrichtsinhalten so zu unterstützen, dass für wenigstens einen Schüler individuell und damit gezielt Unterrichtsinhaltinformationen Ul zu wenigstens einer Unterrichtseinheit ausgewählt werden, auf Grundlage welcher der wenigstens eine Schüler unterrichtet werden kann. Dies ermöglicht eine hochindividualisierte Planung, Durchführung und Auswertung von Unterrichtsinhalten zu wenigstens einer Unterrichtseinheit, denn es ist im Prinzip möglich, jedem Schüler einer Gruppe von Schülern, insbesondere an das jeweilige Leistungs- bzw. Lernniveau angepasst, individuell und damit gezielt Unterrichtsinhaltinformationen Ul zu wenigstens einer Unterrichtseinheit bereitzustellen. Die Steuereinrichtung 40 kann sonach nicht nur eingerichtet sein, auf Grundlage von einer oder mehreren Schülerauswertungsinformationen für wenigstens einen Schüler eine individuelle Auswahl von Unterrichtsinhaltinformationen Ul zu wenigstens einer Unterrichtseinheit auszuwählen, insbesondere um den wenigstens einen Schüler gezielt in seinem Leistungsniveau zu verbessern, sondern auch eingerichtet sein, die entsprechend ausgewählten Unterrichtsinhaltinformationen UI zu wenigstens einer Unterrichtseinheit an ein jeweiliges schülerseitiges Endgerät 60 - der Schüler ist in der Fig. mit dem Buchstaben "S" gekennzeichnet - zu übermitteln und dem jeweiligen Schüler sonach bereitzustellen. Wie in der Fig. beispielhaft dargestellt, kann dies ebenso über eine, z. B. drahtgebundene oder drahtlose, Daten- bzw. Kommunikationsverbindung bzw. über wenigstens ein, z. B. drahtgebundenes oder drahtloses, Kommunikationsnetzwerk direkt oder indirekt erfolgen, über welches der Schüler S vor, während und/oder nach einer Unterrichtseinheit gleichermaßen, insbesondere bidirektional, mit der Lehrkraft LK und/oder mit anderen Schülern kommunizieren kann, z.B. durch Meldung oder Rückmeldung an die Lehrkraft LK.

Die Steuereinrichtung 40 kann zudem eingerichtet sein, auf Grundlage von einer oder mehreren Schülerauswertungsinformationen (alternativ oder ergänzend kann dies auf Grundlage von einer oder mehreren Schülerbewertungsinformationen erfolgen) für wenigstens eine Schulklasse eine individuelle Auswahl von Unterrichtsinhaltinformationen zu wenigstens einer Unterrichtseinheit auszuwählen, insbesondere um die wenigstens eine Schulklasse in ihrem Leistungsniveau zu verbessern. Die Steuereinrichtung 40 kann sonach eingerichtet sein, eine Lehrkraft bei der Planung, Durchführung und Auswertung von Unterrichtsinhalten so zu unterstützen, dass für wenigstens eine Schulklasse individuell und damit gezielt Unterrichtsinhaltinformationen UI zu wenigstens einer Unterrichtseinheit ausgewählt werden, auf Grundlage welcher die wenigstens eine Schulklasse unterrichtet werden kann. Dies ermöglicht eine hochindividualisierte Planung, Durchführung und Auswertung von Unterrichtsinhaltinformationen Ul zu wenigstens einer Unterrichtseinheit, denn es ist im Prinzip möglich, jeder Schulklasse, insbesondere an das jeweilige Leistungs- bzw. Lernniveau angepasst, individuell und damit gezielt Unterrichtsinhaltinformationen UI zu wenigstens einer Unterrichtseinheit bereitzustellen. Die wenigstens eine Steuereinrichtung kann sonach nicht nur eingerichtet sein, auf Grundlage von einer oder mehreren Schülerauswertungsinformationen für wenigstens eine Schulklasse eine individuelle Auswahl von Unterrichtsinhaltinformationen Ul zu wenigstens einer Unterrichtseinheit auszuwählen, insbesondere um die wenigstens eine Schulklasse gezielt in ihrem Leistungsniveau zu verbessern, sondern auch eingerichtet sein, die entsprechend ausgewählten Unterrichtsinhaltinformationen UI zu wenigstens einer Unterrichtseinheit an die schülerseitigen Endgeräte der Schüler der jeweiligen Schulklasse zu übermitteln und der jeweiligen Schulklasse sonach bereitzustellen. Wie in der Fig. beispielhaft dargestellt, kann dies ebenso über eine, z. B. drahtgebundene oder drahtlose, Daten- bzw. Kommunikationsverbindung bzw. über wenigstens ein, z. B. drahtgebundenes oder drahtloses, Kommunikationsnetzwerk direkt oder indirekt erfolgen.

Die Steuereinrichtung 40 kann zudem eingerichtet sein, Arbeitsergebnisse von einer oder mehreren Lehrkräften, insbesondere im Rahmen der Durchführung von mündlichen und/oder schriftlichen Prüfungen, im Hinblick auf wenigstens ein Auswertungskriterium, insbesondere ein die Qualität eines Lernerfolgs beschreibendes Qualitätskriterium, auszuwerten und eine die Auswertung der Lehrkraftarbeitsergebnisse beschreibende Lehrkraftauswertungsinformation zu erzeugen. Entsprechende Lehrkraftwertungsinformationen können ebenso in der Datenspeichereinrichtung 20 gespeichert werden. Die Steuereinrichtung 40 kann zudem eingerichtet sein, eine oder mehrere entsprechende Lehrkraftauswertungsinformationen mit einer oder mehreren Unterrichtsinhaltsinformationen (und umgekehrt) zu verknüpfen, d. h. insbesondere zu korrelieren, um eine Korrelation zwischen bestimmten Unterrichtsinhalten und der Auswertung von Arbeitsergebnissen von einer oder mehreren Lehrkräften herzustellen. Eine entsprechende Auswertung und/oder Korrelation kann wiederum über Algorithmen erfolgen, welche z. B. eingerichtet sind, eine oder mehrere Lehrkraftauswertungsinformationen mit einer oder mehreren Unterrichtsinhaltsinformationen (und umgekehrt) zu verknüpfen, d. h. insbesondere zu korrelieren, um eine Korrelation zwischen bestimmten Unterrichtsinhalten und der Auswertung von Arbeitsergebnissen von einem oder mehreren Lehrkräften herzustellen. Entsprechende Algorithmen können dabei Prinzipien der künstlichen Intelligenz bzw. des maschinellen Lernens sowie mathematische Modelle, insbesondere Sprachmodelle, anwenden bzw. auf Grundlage von Prinzipien der künstlichen Intelligenz bzw. des maschinellen Lernens bzw. mathematischen Modellen, insbesondere Sprachmodellen, trainiert worden sein.

Die Steuereinrichtung 40 kann zudem eingerichtet sein, die Lehrkraftauswertungsinformation bei der Auswahl von in der Datenspeichereinrichtung 20 gespeicherten Unterrichtsinhaltinformationen UI zu wenigstens einer Unterrichtseinheit zu berücksichtigen. Dies kann auf Grundlage der vorstehend beschriebenen Auswertung und/oder Korrelation zwischen bestimmten Unterrichtsinhalten und der Auswertung von Arbeitsergebnissen von einem oder mehreren Lehrkräften erfolgen, um sicherzustellen, dass nur solche Unterrichtsinhaltinformationen zu wenigstens einer Unterrichtseinheit ausgewählt werden, welche sich, z. B. in der Vergangenheit, insbesondere in ähnlichen pädagogischen Aufgabestellungen, als erfolgreich erwiesen haben, um einem oder mehreren Schülern bestimmte Unterrichtsinhalte zu wenigstens einer Unterrichtseinheit zu vermitteln.

Die Steuereinrichtung 40 kann zudem eingerichtet sein, auf Grundlage von ausgewählten in der Datenspeichereinrichtung 20 gespeicherten Unterrichtsinhaltinformationen UI zu der wenigstens einen Unterrichtseinheit, automatisiert in einer Unterrichtseinheit verwendbare Inhalte, d. h. insbesondere elektronische bzw. computertechnisch verarbeitbare Inhalte, weiter insbesondere Dokumente, wie z. B. Arbeitsdokumente, Aufgaben- und Testdokumente, Kontrolldokumente, Präsentationen, interaktive Inhalte, Quiz, Rätsel, lernfördernde Spiele, etc., zu erzeugen, die die ausgewählten Unterrichtsinhaltinformationen UI zu der wenigstens einen Unterrichtseinheit beinhalten, und über die Kommunikationseinheit 23 bzw. - schnittstelle der Datenspeichereinrichtung 20 an die Kommunikationseinheit 33 bzw. -schnittstelle des wenigstens Endgeräts 30 zu kommunizieren. Bei entsprechenden von der Steuereinrichtung 40 auswählbaren bzw. erzeugbaren Unterrichtsinhaltinformationen UI kann es sonach beispielhaft und damit nicht abschließend um elektronische bzw. computertechnisch verarbeitbare Inhalte, weiter insbesondere Dokumente, wie z. B. Arbeitsdokumente, Aufgaben- und Testdokumente, Kontrolldokumente, Präsentationen, interaktive Inhalte, Quiz, Rätsel, lernfördernde Spiele, etc. handeln. Entsprechende Inhalte können prinzipiell auch an die Endgeräte 60 von Schülern und/oder anderen Lehrkräften übertragen werden.

Die Steuereinrichtung 40 kann zudem eingerichtet sein, auf Grundlage wenigstens einer Schülerbewertungsinformationen und/oder wenigstens einer Schülerauswertungsinformation und/oder wenigstens einer Unterrichtsinhaltinformation, insbesondere individualisierte, Lerninhalte und/oder Lernpläne für wenigstens einen Schüler zu erzeugen. Das System 10 ermöglicht es damit, auf Grundlage von in der Schule erbrachten Aktivitäten bzw. Leistungen eines Schülers, welche, wie beschrieben, insbesondere durch entsprechende Schülerbewertungsinformationen und/oder Schülerauswertungsinformationen abgebildet bzw. beschrieben werden können, Lerninhalte und/oder Lernpläne für den wenigstens einen Schüler zu erzeugen, welche der wenigstens eine Schüler außerhalb der Schule, d. h. insbesondere zuhause, z. B. in Form von Übungen, Hausaufgaben, etc., abarbeiten bzw. bearbeiten kann. Derart können Aktivitäten bzw. Leistungen eines Schülers innerhalb der Schule direkt mit Lerninhalten und/oder Lernplänen für den wenigstens einen Schüler außerhalb der Schule verknüpft werden, und umgekehrt, was eine umfassende individualisierte Vermittlung von Unterrichts- und Lerninhalten, hierunter sind z. B. Übungen, Hausaufgaben, etc. zu verstehen, ermöglicht. Entsprechendes kann gleichermaßen für eine individualisierte Betreuung einer Gruppe von Schülern, d. h. z. B. einer Schulklasse, gelten.

Mit dem System 10 lässt sich ein Verfahren zur wenigstens teilautomatisierten Erzeugung von Unterrichtsinhalten, insbesondere für Schüler, implementieren, welches einen oder mehrere der folgenden Schritte umfasst:
- Speichern, vermittels einer Datenspeichereinrichtung 20, einer oder mehrerer Unterrichtsinhaltinformationen Ul zu wenigstens einer Unterrichtseinheit, wobei die Datenspeichereinrichtung 20 eine Kommunikationseinheit bzw. -schnittstelle 23 aufweist, über welche die Datenspeichereinrichtung 20 mit wenigstens einem Endgerät 30 eines Nutzers kommunizieren kann; Erzeugen, vermittels wenigstens einem Endgerät 30, welches eingerichtet ist, auf Grundlage von Nutzereingaben Anfragen an die Datenspeichereinrichtung 20, betreffend ein oder mehrere von einem Nutzer, insbesondere einer Lehrkraft, geplante Unterrichtsinhaltinformationen UI zu wenigstens einer geplanten Unterrichtseinheit, zu erzeugen, wobei das wenigstens eine Endgerät 30 eine Kommunikationseinheit bzw. -schnittstelle aufweist, über welche das wenigstens eine Endgerät 30 mit der Datenspeichereinrichtung 20 kommunizieren kann, von Anfragen an die Datenspeichereinrichtung 20, betreffend ein oder mehrere von einem Nutzer, insbesondere einer Lehrkraft, geplante Unterrichtsinhaltinformationen UI zu wenigstens einer geplanten Unterrichtseinheit;
- Auswerten, vermittels wenigstens einer hardware- und/oder softwaremäßig implementierten Steuereinrichtung 40, welche eingerichtet ist, eine über die Kommunikationseinheit 33 bzw. -schnittstelle des wenigstens einen Endgeräts 30 an die Datenspeichereinrichtung 20 zu kommunizierende oder kommunizierte Anfrage im Hinblick auf in der Datenspeichereinrichtung 20 gespeicherte, zu der Anfrage passende Unterrichtsinhaltinformationen Ul zu wenigstens einer Unterrichtseinheit auszuwerten, auf Grundlage der Auswertung die entsprechenden in der Datenspeichereinrichtung 20 gespeicherten Unterrichtsinhaltinformationen Ul zu der wenigstens einen Unterrichtseinheit auszuwählen, und die ausgewählten Unterrichtsinhaltinformationen Ul zu der wenigstens einen Unterrichtseinheit über die Kommunikationseinheit 23 bzw. -schnittstelle der Datenspeichereinrichtung 20 an die Kommunikationseinheit 33 bzw. -schnittstelle des wenigstens einen Endgeräts 30 zu kommunizieren, einer über die Kommunikationseinheit 33 bzw. -schnittstelle des wenigstens einen Endgeräts 30 an die Datenspeichereinrichtung 20 zu kommunizierenden oder kommunizierten Anfrage im Hinblick auf in der Datenspeichereinrichtung 20 gespeicherte, zu der Anfrage passende Unterrichtsinhaltinformationen UI zu wenigstens einer Unterrichtseinheit;
- Auswählen, auf Grundlage der Auswertung, der entsprechenden in der Datenspeichereinrichtung 20 gespeicherten Unterrichtsinhaltinformationen UI zu der wenigstens einen Unterrichtseinheit, und
- Kommunizieren (Übertragen) der ausgewählten Unterrichtsinhaltinformationen Ul zu der wenigstens einen Unterrichtseinheit über die Kommunikationseinheit 23 bzw. -schnittstelle der Datenspeichereinrichtung 20 an die Kommunikationseinheit 33 bzw. -schnittstelle des wenigstens einen Endgeräts 30.

## Patentansprüche

1. Kommunikationssystem zur wenigstens teilautomatisierten Erzeugung von Unterrichtsinhalten, umfassend:
- wenigstens eine Datenspeichereinrichtung, in welcher ein oder mehrere Unterrichtsinhaltinformationen zu wenigstens einer Unterrichtseinheit abrufbar gespeichert sind, wobei die wenigstens eine Datenspeichereinrichtung wenigstens eine Kommunikationsschnittstelle aufweist, über welche die wenigstens eine Datenspeichereinrichtung mit wenigstens einem Endgerät wenigstens eines Nutzers kommunizieren kann;
- wenigstens ein Endgerät, welches eingerichtet ist, auf Grundlage von Nutzereingaben Anfragen an die wenigstens eine Datenspeichereinrichtung, betreffend ein oder mehrere von einem Nutzer, insbesondere einer Lehrkraft, geplante Unterrichtsinhaltinformationen zu wenigstens einer geplanten Unterrichtseinheit, zu erzeugen, wobei das wenigstens eine Endgerät wenigstens eine Kommunikationsschnittstelle aufweist, über welche das wenigstens eine Endgerät mit der wenigstens einen Datenspeichereinrichtung kommunizieren kann;
- wenigstens eine hardware- und/oder softwaremäßig implementierte Steuereinrichtung, welche eingerichtet ist, eine über die wenigstens eine Kommunikationsschnittstelle des wenigstens einen Endgeräts an die wenigstens eine Datenspeichereinrichtung zu kommunizierende oder kommunizierte Anfrage im Hinblick auf in der wenigstens einen Datenspeichereinrichtung gespeicherte, zu der Anfrage passende Unterrichtsinhaltinformationen zu wenigstens einer Unterrichtseinheit auszuwerten, auf Grundlage der Auswertung wenigstens eine entsprechende in der wenigstens einen Datenspeichereinrichtung gespeicherte Unterrichtsinhaltinformation zu der wenigstens einen Unterrichtseinheit auszuwählen, und die wenigstens eine ausgewählte Unterrichtsinhaltinformation zu der wenigstens einen Unterrichtseinheit über die wenigstens eine Kommunikationsschnittstelle der wenigstens einen Datenspeichereinrichtung an die wenigstens eine Kommunikationsschnittstelle des wenigstens einen Endgeräts zu kommunizieren.

2. Kommunikationssystem nach Anspruch 1, wobei die wenigstens eine Steuereinrichtung eingerichtet ist, eine auf dem wenigstens einen Endgerät wiedergebbare Nutzeroberfläche zu erzeugen, über welche ein Nutzer Eingaben, betreffend ein oder mehrere von einem Nutzer geplante Unterrichtsinhaltinformationen zu wenigstens einer geplanten Unterrichtseinheit, zu tätigen.

3. Kommunikationssystem nach Anspruch 1 oder 2, wobei die wenigstens eine Steuereinrichtung eingerichtet ist, eine auf dem wenigstens einen Endgerät wiedergebbare Nutzeroberfläche zu erzeugen, über welche ein Nutzer Unterstützung bei Eingaben, betreffend ein oder mehrere von einem Nutzer geplante Unterrichtsinhaltinformationen zu wenigstens einer geplanten Unterrichtseinheit, erhält, wobei die Nutzeroberfläche optional wenigstens eine der folgenden, insbesondere über Drop-Down-Menüs auswählbaren, Kategorien enthält: Art und/oder Inhalt der Unterrichtsinhaltinformationen, Art und/oder Inhalt der Unterrichtseinheit, Dauer der Unterrichtseinheit, Ort der Unterrichtseinheit, Zielgruppe der Unterrichtsinhaltinformationen, Zielgruppe der Unterrichtseinheit.

4. Kommunikationssystem nach einem der vorhergehenden Ansprüche, wobei die wenigstens eine Steuereinrichtung eingerichtet ist, ein oder mehrere in der wenigstens einen Datenspeichereinrichtung gespeicherte Unterrichtsinhaltinformationen zu wenigstens einer Unterrichtseinheit auf Grundlage von Nutzereingaben anzupassen, wobei die Nutzereingaben über wenigstens eine Lehrkraft, insbesondere eine Lehrkraft, welche die in der wenigstens einen Datenspeichereinrichtung gespeicherten Unterrichtsinhaltinformationen zu wenigstens einer Unterrichtseinheit zur Planung wenigstens einer Unterrichtseinheit nutzt, und/oder über wenigstens einen Schüler, insbesondere einen Schüler, welcher an wenigstens einer Unterrichtseinheit, in welcher entsprechende Unterrichtsinhaltinformationen vermittelt werden sollen, teilnehmen soll oder teilnahm, und/oder von einem Dritten, insbesondere einer anderen Lehrkraft, welche die in der wenigstens einen Datenspeichereinrichtung gespeicherten Unterrichtsinhaltinformationen zu wenigstens einer Unterrichtseinheit zur Planung wenigstens einer Unterrichtseinheit nutzt oder nutzte, erfolgen.

5. Kommunikationssystem nach einem der vorhergehenden Ansprüche, wobei die wenigstens eine Steuereinrichtung eingerichtet ist, ein oder mehrere in der wenigstens einen Datenspeichereinrichtung gespeicherte Unterrichtsinhaltinformationen zu wenigstens einer Unterrichtseinheit auf Grundlage von computerimplementierten Operationen automatisiert anzupassen, wobei die computerimplementierten Eingaben auf Grundlage von die in der wenigstens einen Datenspeichereinrichtung gespeicherten Unterrichtsinhaltinformationen zu wenigstens einer Unterrichtseinheit im Hinblick auf wenigstens ein Zielkriterium bewertenden Algorithmen, insbesondere Algorithmen der künstlichen Intelligenz, erfolgen, wobei das wenigstens eine Zielkriterium optional einen angestrebten und/oder erreichten Lernerfolg, gegebenenfalls im Hinblick auf wenigstens einen Schüler, betrifft.

6. Kommunikationssystem nach einem der vorhergehenden Ansprüche, wobei die wenigstens eine Steuereinrichtung eingerichtet ist, ein oder mehrere neue Unterrichtsinhaltinformationen zu wenigstens einer Unterrichtseinheit auf Grundlage von Nutzereingaben zu erzeugen und in der wenigstens einen Datenspeichereinrichtung abzuspeichern, wobei die Nutzereingaben über wenigstens eine Lehrkraft, insbesondere eine Lehrkraft, welche die in der wenigstens einen Datenspeichereinrichtung gespeicherten Unterrichtsinhaltinformationen zu wenigstens einer Unterrichtseinheit zur Planung wenigstens einer Unterrichtseinheit nutzt, und/oder über wenigstens einen Schüler, insbesondere einen Schüler, welcher an wenigstens einer Unterrichtseinheit, in welcher entsprechende Unterrichtsinhaltinformationen vermittelt werden sollen, teilnehmen soll oder teilnahm, und/oder von einem Dritten, insbesondere einer anderen Lehrkraft, welche die in der wenigstens einen Datenspeichereinrichtung gespeicherten Unterrichtsinhaltinformationen zu wenigstens einer Unterrichtseinheit zur Planung wenigstens einer Unterrichtseinheit nutzt oder nutzte, erfolgen.

7. Kommunikationssystem nach einem der vorhergehenden Ansprüche, wobei die wenigstens eine Steuereinrichtung eingerichtet ist, ein oder mehrere neue Unterrichtsinhaltinformationen zu wenigstens einer Unterrichtseinheit auf Grundlage von computerimplementierten Operationen automatisiert zu erzeugen und in der wenigstens einen Datenspeichereinrichtung abzuspeichern, wobei die computerimplementierten Eingaben auf Grundlage von die in der wenigstens einen Datenspeichereinrichtung gespeicherten Unterrichtsinhaltinformationen zu wenigstens einer Unterrichtseinheit im Hinblick auf wenigstens ein Zielkriterium bewertenden Algorithmen, insbesondere Algorithmen der künstlichen Intelligenz, erfolgen, wobei optional das wenigstens eine Zielkriterium einen angestrebten und/oder erreichten Lernerfolg, gegebenenfalls im Hinblick auf wenigstens einen Schüler, betrifft.

8. Kommunikationssystem nach einem der vorhergehenden Ansprüche, wobei das wenigstens eine Endgerät eingerichtet ist, mit der wenigstens einen Datenspeichereinrichtung zu kommunizieren, um auf Grundlage von Nutzereingaben erzeugte Bewertungen, betreffend ein oder mehrere, in der wenigstens einen Datenspeichereinrichtung gespeicherte Unterrichtsinhaltinformationen zu wenigstens einer geplanten Unterrichtseinheit, vorzunehmen.

9. Kommunikationssystem nach einem der vorhergehenden Ansprüche, wobei die wenigstens eine Steuereinrichtung eingerichtet ist, Arbeitsergebnisse von einem oder mehreren Schülern, insbesondere im Rahmen von mündlichen und/oder schriftlichen Prüfungen, im Hinblick auf wenigstens ein Auswertungskriterium, insbesondere ein die Qualität eines Lernerfolgs beschreibendes Qualitätskriterium, auszuwerten und wenigstens eine die Auswertung der Arbeitsergebnisse beschreibende Schülerbewertungsinformation zu erzeugen, wobei die wenigstens eine Steuereinrichtung optional eingerichtet ist, die wenigstens eine Schülerbewertungsinformation bei der Auswahl einer in der wenigstens einen Datenspeichereinrichtung gespeicherten Unterrichtsinhaltinformationen zu wenigstens einer Unterrichtseinheit zu berücksichtigen.

10. Kommunikationssystem nach einem der vorhergehenden Ansprüche, wobei die wenigstens eine Steuereinrichtung eingerichtet ist, Beiträge von einem oder mehreren Schülern, insbesondere im Rahmen der Teilnahme an wenigstens einer Unterrichtseinheit, im Hinblick auf wenigstens ein Auswertungskriterium, insbesondere ein die Qualität eines Lernerfolgs beschreibendes Qualitätskriterium, auszuwerten und wenigstens eine die Auswertung der Beiträge beschreibende Schülerauswertungsinformation zu erzeugen, wobei die wenigstens eine Steuereinrichtung optional eingerichtet ist, die wenigstens eine Schülerauswertungsinformation bei der Auswahl einer in der wenigstens einen Datenspeichereinrichtung gespeicherten Unterrichtsinhaltinformationen zu wenigstens einer Unterrichtseinheit zu berücksichtigen.

11. Kommunikationssystem nach einem der Ansprüche 9 bis 10, wobei die wenigstens eine Steuereinrichtung eingerichtet ist, auf Grundlage von einer oder mehreren Schülerbewertungsinformationen und/oder Schülerauswertungsinformationen für wenigstens einen Schüler eine individuelle Auswahl von Unterrichtsinhaltinformationen zu wenigstens einer Unterrichtseinheit auszuwählen, insbesondere um den wenigstens einen Schüler in seinem Leistungsniveau zu verbessern.

12. Kommunikationssystem nach einem der Ansprüche 9 bis 11, wobei die wenigstens eine Steuereinrichtung eingerichtet ist, auf Grundlage von einer oder mehreren Schülerbewertungsinformationen und/oder Schülerauswertungsinformationen für wenigstens eine Schulklasse eine individuelle Auswahl von Unterrichtsinhaltinformationen zu wenigstens einer Unterrichtseinheit auszuwählen, insbesondere um die wenigstens eine Schulklasse in ihrem Leistungsniveau zu verbessern.

13. Kommunikationssystem nach einem der vorhergehenden Ansprüche, wobei die wenigstens eine Steuereinrichtung eingerichtet ist, Arbeitsergebnisse von einem oder mehreren Lehrkräften, insbesondere im Rahmen der Durchführung von mündlichen und/oder schriftlichen Prüfungen, im Hinblick auf wenigstens ein Auswertungskriterium, insbesondere ein die Qualität eines Lernerfolgs beschreibendes Qualitätskriterium, auszuwerten und wenigstens eine die Auswertung der Lehrkraftarbeitsergebnisse beschreibende Lehrkraftauswertungsinformation zu erzeugen, wobei die wenigstens eine Steuereinrichtung optional eingerichtet ist, die wenigstens eine Lehrkraftauswertungsinformation bei der Auswahl einer in der Datenspeichereinrichtung gespeicherten Unterrichtsinhaltinformation zu wenigstens einer Unterrichtseinheit zu berücksichtigen.

14. Kommunikationssystem nach einem der vorhergehenden Ansprüche, wobei die wenigstens eine Steuereinrichtung eingerichtet ist, auf Grundlage von ausgewählten in der wenigstens einen Datenspeichereinrichtung gespeicherten Unterrichtsinhaltinformationen zu der wenigstens einen Unterrichtseinheit, automatisiert in einer Unterrichtseinheit verwendbare Inhalte, insbesondere Dokumente, wie z. B. Arbeitsdokumente, Aufgaben- und Testdokumente, Kontrolldokumente, Präsentationen, interaktive Inhalte, Quiz, Rätsel, lernfördernde Spiele, etc., zu erzeugen, die die ausgewählten Unterrichtsinhaltinformationen zu der wenigstens einen Unterrichtseinheit beinhalten, und über eine Kommunikationsschnittstelle der wenigstens einen Datenspeichereinrichtung an eine Kommunikationsschnittstelle des wenigstens einen Endgeräts zu kommunizieren;
und/oder wobei die wenigstens eine Steuereinrichtung eingerichtet ist, auf Grundlage wenigstens einer Schülerbewertungsinformationen und/oder wenigstens einer Schülerauswertungsinformation und/oder wenigstens einer Unterrichtsinhaltinformation eingerichtet ist, insbesondere individualisierte, Lerninhalte und/oder Lernpläne für wenigstens einen Schüler zu erzeugen.

15. Verfahren zur wenigstens teilautomatisierten Erzeugung von Unterrichtsinhalten, insbesondere für Schüler, wobei ein Kommunikationssystem nach einem der vorhergehenden Ansprüche zur Durchführung des Verfahrens verwendet wird.
